# EUROPEAN PATENT SPECIFICATION

(11) **EP 4 510 546 B1**
(45) Date of publication and mention of the grant of the patent: **21.10.2026**
(21) Application number: 23890107.8
(22) Date of filing: 19.05.2023
(51) Int. Cl.: H04M 1/02

(54) **ELECTRONIC DEVICE**
ELEKTRONISCHE VORRICHTUNG
DISPOSITIF ÉLECTRONIQUE

(30) Priority: 15.11.2022 CN 202223049764 U
(43) Date of publication of application: 19.02.2025
(73) Proprietor: Honor Device Co., Ltd., Shenzhen, Guangdong 518040 (CN)
(72) Inventor: LIU, Bo, Shenzhen, Guangdong 518040 (CN)
(74) Representative: Gill Jennings & Every LLP
(86) International application number: PCT/CN2023/095290
(87) International publication number: WO 2024/103663

(56) References cited:
- WO-A1-2022/075568
- CN-A- 110 970 248
- CN-U- 216 649 723
- CN-U- 217 183 322
- CN-U- 217 445 412
- US-A1- 2015 181 737
- US-A1- 2018 109 659

## Description

This application claims priority to Chinese Patent Application No. 202223049764.9, filed with the China National Intellectual Property Administration on November 15, 2022 and entitled "ELECTRONIC DEVICE".

### TECHNICAL FIELD

This application relates to the field of manufacturing technologies, and in particular, to an electronic device.

### BACKGROUND

With the development of science and technology, a variety of electronic devices have become indispensable products in daily life and production. Electronic devices such as a cellphone and a computer are already widely used in daily work and life.

Currently, the electronic devices have large assembly difficulty, low precision, a low manufacturing yield, and high costs.

US 2018/109659 A1 discloses an electronic device having liquid-resistant modifications that prevent liquid ingress into an opening (or openings) in an enclosure of the electronic device.

US 2015/181737 A1 discloses an electronic device which includes a first housing, an second housing coupled to the first housing, and a flexible sealing member mounted on the second housing.

### SUMMARY

An electronic device provided in this application is easy to assemble, has high precision, a high manufacturing yield, and low costs.

The electronic device provided in this application includes a first structural member and a second structural member, where the second structural member is fixedly connected to the first structural member.

A mounting groove is disposed on the first structural member, the mounting groove includes a first groove surface and a second groove surface that are distributed opposite to each other, and the second structural member includes a first side and a second side that face away from each other. At least a part of the second structural member is mounted in the mounting groove, the first side faces the first groove surface, the second side faces the second groove surface, a first limiting block is disposed between the first side and the first groove surface, a second limiting block is disposed between the second side and the second groove surface, and projections of the first limiting block and the second limiting block on the first side are staggered with each other.

The projections of the first limiting block and the second limiting block on the first side are staggered with each other, at least a part of a part that is between the first side and the first groove surface and that corresponds to the second limiting block is a gap, and the gap forms a first avoidance clearance. At least a part of a part that is between the second side and the second groove surface and that corresponds to the first limiting block is a gap, and the gap forms a second avoidance clearance. The first avoidance clearance and the second avoidance clearance provide the second structural member, the first limiting block, and the second limiting block with deformation spaces. Even if machining precision of the mounting groove of the first structural member, the second structural member, the first limiting block, or the second limiting block is slightly poor, the second structural member may still be successfully mounted in the mounting groove of the first structural member.

The first limiting block and the second limiting block have elastic deformation performance. Therefore, the first limiting block and the second limiting block may be deformed when the first structural member and the second structural member are assembled, to facilitate assembly of the first structural member and the second structural member. The first limiting member and the second limiting member may be made of plastic.

Therefore, a requirement for machining precision of the mounting groove of the first structural member and the second structural member is reduced, so that efficiency of assembling the first structural member and the second structural member is improved with high assembly precision of the first structural member and the second structural member, thereby increasing a manufacturing yield of the electronic device, and reducing costs.

In some embodiments, the projections of the first limiting block and the second limiting block on the first side are completely staggered. Therefore, the first limiting block, the second limiting block, and the second structural member have larger deformation spaces, and the requirement for machining precision of the mounting groove of the first structural member and the second structural member is further reduced.

In some embodiments, the first limiting block is convexly disposed on the first side or the first groove surface, and the second limiting block is convexly disposed on the second side or the second groove surface.

Therefore, a manner of disposing the first limiting block and the second limiting block may be selected according to a structure of a product and an actual requirement, thereby improving machining flexibility.

In some embodiments, the first limiting block is fixed on the first groove surface, the first limiting block is convex relative to the first groove surface, and one side that is of the first limiting block and that faces away from the first groove surface abuts against the first side. The second limiting block is fixed on the second groove surface, the second limiting block is convex relative to the second groove surface, and one side that is of the second limiting block and that faces away from the second groove surface abuts against the second side.

Therefore, in a case in which the first structural member is relatively easy to machine, the first limiting block and the second limiting block are disposed on the first structural member, thereby increasing a product yield and reducing costs.

In some embodiments, a first limiting groove is concavely disposed on the first groove surface, a second limiting groove is concavely disposed on the second groove surface, the first limiting block includes a first fixed part and a first limiting part that are fixedly connected, and the second limiting block includes a second fixed part and a second limiting part that are fixedly connected. The first fixed part is fastened in the first limiting groove, the first limiting part is convex relative to the first groove surface, the second fixed part is fastened in the second limiting groove, and the second limiting part is convex relative to the second groove surface.

Therefore, it is convenient to perform machining when the first limiting block and the second limiting block are made of a same material but the first limiting block and the first structural member are made of different materials, and the first limiting block and the second limiting block may be separately machined in batches, thereby helping to improve production efficiency.

In some embodiments, the first limiting block is fixed on the first side, the first limiting block is convex relative to the first side, and one side that is of the first limiting block and that faces away from the first side abuts against the first groove surface. The second limiting block is fixed on the second side, the second limiting block is convex relative to the second side, and one side that is of the second limiting block and that faces away from the second side abuts against the second groove surface.

Therefore, in a case in which the second structural member is relatively easy to machine, the first limiting block and the second limiting block may be disposed on the second structural member, thereby increasing a product yield and reducing costs.

In some embodiments, the electronic device further includes a rotating mechanism, the first structural member includes a first middle frame and a second middle frame, the second structural member includes a first decorative member and a second decorative member, the first decorative member is fixedly connected to the first middle frame, and the second decorative member is fixedly connected to the second middle frame. The rotating mechanism is connected between the first middle frame and the second middle frame, so that the first middle frame and the second middle frame can be rotated relative to each other.

That is, the electronic device is specifically a foldable cellphone. When the foldable cellphone uses a structure in which the first limiting block and the second limiting block are staggered with each other, a requirement for machining precision of some components of the cellphone may be reduced, to improve assembly efficiency of some components and improve assembly precision, thereby increasing a manufacturing yield of the foldable cellphone, and reducing manufacturing costs.

In some embodiments, the first middle frame includes a first bearing plate and a first frame body, the first frame body is disposed around a part of periphery of the first bearing plate and is fixedly connected to the first bearing plate, a first fitting groove is disposed on the first frame body, the first fitting groove extends around a thickness direction of the first middle frame, and the first fitting groove has a first groove side surface and a second groove side surface that are disposed opposite to each other. The first fitting groove is the mounting groove, the first groove side surface is the first groove surface, and the second groove side surface is the second groove surface. The first decorative member extends around a thickness direction of the electronic device and includes a first decorative part and a first mounting part that are fixedly connected; the first mounting part includes a first mounting side surface and a second mounting side surface that face away from each other; the first mounting side surface is the first side, and the second mounting side surface is the second side; the first mounting part is mounted in the first fitting groove, the first mounting side surface faces the first groove side surface, and the second mounting side surface faces the second groove side surface; and the first limiting block is disposed between the first mounting side surface and the first groove side surface, and the second limiting block is disposed between the second mounting side surface and the second groove side surface.

The projections of the first limiting block and the second limiting block on the first side are staggered with each other, a part that is between the first mounting side surface and the first groove side surface and that corresponds to the second limiting block is a gap, and the gap forms a first avoidance clearance. A part that is between the second mounting side surface and the second groove side surface and that corresponds to the first limiting block is a gap, and the gap forms a second avoidance clearance. The first mounting part, the first limiting block, and the second limiting block all have elastic deformation performance, and the first avoidance clearance and the second avoidance clearance provide the first mounting part, the first limiting block, and the second limiting block with deformation spaces. Even if machining precision of the first fitting groove of the first middle frame, the first decorative member, the first limiting block, or the second limiting block is slightly poor, the first decorative member may still be successfully mounted in the first fitting groove of the first middle frame.

Therefore, a requirement for machining precision of the first middle frame and the first decorative member is reduced. When the first decorative member is mounted on the first middle frame, assembly convenience is improved and assembly precision is high, so that assembly efficiency of the first middle frame and the first decorative member is improved, and an assembly yield of the first decorative member and the first middle frame is increased, and manufacturing costs are reduced. After the assembly precision of the first middle frame and the first decorative member is improved, the first decorative member and the first middle frame, as parts of an appearance surface of the cellphone, are more smoothly butt-jointed, thereby enhancing appearance aesthetics of the cellphone without scratching a user.

In some embodiments, the first limiting block is convexly disposed on the first groove side surface and/or the first mounting side surface, and the second limiting block is convexly disposed on the second groove side surface and/or the second mounting side surface.

Therefore, a manner of machining the first limiting block and the second limiting block may be selected according to a structure of the cellphone and an actual design requirement, so that the manner is suitable for more types of foldable cellphones.

In some embodiments, the first limiting block is convexly disposed on the first groove side surface, the first limiting block is convex relative to the first groove side surface, and one side that is of the first limiting block and that faces away from the first groove side surface abuts against the first mounting side surface; and the second limiting block is fixed on the second groove side surface, the second limiting block is convex relative to the second groove side surface, and one side that is of the second limiting block and that faces away from the second groove side surface abuts against the second mounting side surface.

Therefore, in a case in which the first middle frame is relatively easy to machine, the first limiting block and the second limiting block are disposed on the first middle frame, thereby increasing a product yield and reducing costs.

In some embodiments, the first limiting block is fixed on the first mounting side surface and is convex relative to the first mounting side surface; one side that is of the first limiting block and that faces away from the first mounting side surface abuts against the first groove side surface; the second limiting block is fixed on the second mounting side surface and is convex relative to the second mounting side surface; and one side that is of the second limiting block and that faces away from the second mounting side surface abuts against the second groove side surface.

Therefore, in a case in which the first decorative member is relatively easy to machine, the first limiting block and the second limiting block are disposed on the first decorative member, thereby increasing a product yield and reducing costs.

In some embodiments, the first decorative part includes a first decorative surface, a second decorative surface, a first decorative side surface, and a second decorative side surface; the first decorative surface and the second decorative surface face away from each other in a thickness direction of the first decorative member, the first decorative side surface is connected between one side of the first decorative surface and one side of the second decorative surface, and the second decorative side surface is connected between the other side of the first decorative surface and the other of the second decorative surface; and the second decorative surface faces the first frame body, and the first mounting part is fixed on the second decorative surface. The first frame body has a first outer side surface, the first outer side surface is butt-jointed with the second decorative side surface, and the first decorative surface, the first outer side surface, and the second decorative side surface are parts of an appearance surface of the electronic device.

Therefore, when assembly precision of the first middle frame and the first decorative member is improved, butt-joint precision of the first outer side surface and the first decorative side surface is also improved, so that the appearance surface of the cellphone is flatter, the user is prevented from being scratched by an appearance of the cellphone, and the appearance aesthetics of the cellphone is enhanced.

In some embodiments, the second middle frame includes a second bearing plate and a second frame body, and the second frame body is disposed around a part of periphery of the second bearing plate and is fixedly connected to the second bearing plate; a second fitting groove is disposed on the second frame body; the second fitting groove extends around a thickness direction of the second middle frame, and the second fitting groove has a third groove side surface and a fourth groove side surface that are disposed opposite to each other; the second fitting groove is the mounting groove, the third groove side surface is the first groove surface, and the fourth groove side surface is the second groove surface; the second decorative member extends around a thickness direction of the electronic device, and includes a second decorative part and a second mounting part that are fixedly connected; the second mounting part includes a third mounting side surface and a fourth mounting side surface that face away from each other; the third mounting side surface is the first side, and the fourth mounting side surface is the second side; the second mounting part is mounted in the second fitting groove, the third mounting side surface faces the third groove side surface, and the fourth mounting side surface faces the fourth groove side surface; and the second limiting block is disposed between the third mounting side surface and the third groove side surface, and the second limiting block is disposed between the fourth mounting side surface and the fourth groove side surface.

Projections of the first limiting block and the second limiting block on the third mounting side surface are staggered with each other, a part that is between the third mounting side surface and the third groove side surface and that corresponds to the second limiting block is a gap, and the gap forms a first avoidance clearance. A part that is between the fourth mounting side surface and the fourth groove side surface and that corresponds to the first limiting block is a gap, and the gap forms a second avoidance clearance. The second mounting part, the first limiting block, and the second limiting block all have elastic deformation performance, and the first avoidance clearance and the second avoidance clearance provide the second mounting part, the first limiting block, and the second limiting block with deformation spaces. Even if machining precision of the mounting groove of the second middle frame, the second decorative member, the first limiting block, or the second limiting block is slightly poor, the second decorative member may still be successfully mounted in the second fitting groove of the second middle frame.

Therefore, a requirement for machining precision of the second middle frame and the second decorative member is reduced. When the second decorative member is mounted on the second middle frame, assembly convenience is improved and assembly precision is high, so that assembly efficiency of the second middle frame and the second decorative member is improved, and an assembly yield of the second decorative member and the second middle frame is increased, and manufacturing costs are reduced. After the assembly precision of the second middle frame and the second decorative member is improved, the second decorative member and the second middle frame, as parts of an appearance surface of the cellphone, are more smoothly butt-jointed, thereby enhancing appearance aesthetics of the cellphone without scratching a user.

In some embodiments, the first limiting block is convexly disposed on the third groove side surface and/or the third mounting side surface, and the second limiting block is convexly disposed on the fourth groove side surface and/or the fourth mounting side surface.

Therefore, a manner of machining the first limiting block and the second limiting block may be selected according to a structure of the cellphone and an actual design requirement, so that the manner is suitable for more types of foldable cellphones.

In some embodiments, the first limiting block is convexly disposed on the third groove side surface, the first limiting block is convex relative to the third groove side surface, and one side that is of the first limiting block and that faces away from the third groove side surface abuts against the third mounting side surface; and the second limiting block is fixed on the fourth groove side surface, the second limiting block is convex relative to the fourth groove side surface, and one side that is of the second limiting block and that faces away from the fourth groove side surface abuts against the fourth mounting side surface

Therefore, in a case in which the second middle frame is relatively easy to machine, the first limiting block and the second limiting block are disposed on the second middle frame, thereby increasing a product yield and reducing costs.

In some embodiments, the first limiting block is fixed on the third mounting side surface and is convex relative to the third mounting side surface; one side that is of the first limiting block and that faces away from the third mounting side surface abuts against the third groove side surface; the second limiting block is fixed on the fourth mounting side surface and is convex relative to the fourth mounting side surface; and one side that is of the second limiting block and that faces away from the fourth mounting side surface abuts against the fourth groove side surface.

Therefore, in a case in which the second decorative member is relatively easy to machine, the first limiting block and the second limiting block are disposed on the second decorative member, thereby increasing a product yield and reducing costs.

In some embodiments, the second decorative part includes a third decorative surface, a fourth decorative surface, a third decorative side surface, and a fourth decorative side surface; the third decorative surface and the fourth decorative surface face away from each other in a thickness direction of the second decorative member, the third decorative side surface is connected between one side of the third decorative surface and one side of the fourth decorative surface, and the fourth decorative side surface is connected between the other side of the third decorative surface and the other side of the fourth decorative surface; the fourth decorative surface faces the second frame body, and the second mounting part is fixed on the fourth decorative surface; the second frame body has a second outer side surface, the second outer side surface is butt-jointed with the fourth decorative side surface, and the third decorative surface, the second outer side surface, and the fourth decorative side surface are parts of an appearance surface of the electronic device.

Therefore, when assembly precision of the second middle frame and the second decorative member is improved, butt-joint precision of the second outer side surface and the fourth decorative side surface is also improved, so that the appearance surface of the cellphone is flatter, the user is prevented from being scratched by an appearance of the cellphone, and the appearance aesthetics of the cellphone is enhanced.

In some embodiments, the foldable cellphone further includes a display. The display includes a first display region, a third display region, and a second display region that are sequentially connected in a width direction of the electronic device. The first display region corresponds to the first middle frame, the second display region corresponds to the second middle frame, and the third display region corresponds to the rotating mechanism.

The first display region is stacked on the first bearing plate, and is fixed on the first bearing plate by using a first bonding layer. A part of decorative surface of the first decorative part of the first decorative member is stacked on an edge of the first display region, a first connection groove is disposed on a decorative surface that is of the first decorative part and that faces the first display region, a second bonding layer and a first filling layer that are stacked are disposed in the first connection groove, the first filling layer is fastened in the first connection groove by using the second bonding layer, and one side that is of the first filling layer and that faces away from the second bonding layer is in contact with the edge of the first display region. Therefore, a slit between the first display region and the first decorative member can be sealed, to prevent foreign matters such as dust and water from entering the cellphone.

The second display region is stacked on the second bearing plate, and is fixed on the second bearing plate by using a third bonding layer. A part of decorative surface of the second decorative part of the second decorative member is stacked on an edge of the second display region, a second connection groove is disposed on a decorative surface that is of the second decorative part and that faces the second display region, a fourth bonding layer and a second filling layer are stacked in the second connection groove, the second filling layer is fastened in the second connection groove by using the fourth bonding layer, and one side that is of the second filling layer and that faces away from the fourth bonding layer is in contact with the edge of the second display region. Therefore, a slit between the second display region and the second decorative member can be sealed, to prevent foreign matters such as dust from entering the cellphone.

In some embodiments, the first structural member includes a middle frame, and the second structural member includes a decorative member; the decorative member is fixedly connected to the middle frame; the middle frame includes a bearing plate and a frame body, and the frame body is disposed around a periphery of the bearing plate and is fixedly connected to the bearing plate; a fitting groove is disposed on the frame body; the fitting groove extends around a thickness direction of the middle frame, and the fitting groove has a first groove side surface and a second groove side surface that are disposed opposite to each other; the fitting groove is the mounting groove, the first groove side surface is the first groove surface, and the second groove side surface is the second groove surface; the decorative member extends around a thickness direction of the electronic device, and includes a decorative part and a mounting part that are fixedly connected; and the mounting part includes a first mounting side surface and a second mounting side surface that face away from each other, the first mounting side surface is the first side, and the second mounting side surface is the second side. The mounting part is mounted in the fitting groove, the first mounting side surface faces the first groove side surface, and the second mounting side surface faces the second groove side surface; and the first limiting block is disposed between the first mounting side surface and the first groove side surface, and the second limiting block is disposed between the second mounting side surface and the second groove side surface. That is, the electronic device is specifically a bar phone.

Projections of the first limiting block and the second limiting block on the first mounting side surface are staggered with each other, a part that is between the first mounting side surface and the first groove side surface and that corresponds to the second limiting block is a gap, and the gap forms a first avoidance clearance. A part that is between the second mounting side surface and the second groove side surface and that corresponds to the first limiting block is a gap, and the gap forms a second avoidance clearance. The mounting part, the first limiting block, and the second limiting block all have elastic deformation performance, and the first avoidance clearance and the second avoidance clearance provide the mounting part, the first limiting block, and the second limiting block with deformation spaces. Even if machining precision of the fitting groove of the middle frame, the decorative member, the first limiting block, or the second limiting block is slightly poor, the decorative member may still be successfully mounted in the fitting groove of the middle frame.

Therefore, when a structure in which the first limiting block and the second limiting block are staggered with each other is used, a requirement for machining precision of some components of the bar phone may be reduced, to improve assembly efficiency of some components and improve assembly precision, thereby increasing a manufacturing yield of the bar phone, and reducing manufacturing costs.

In some embodiments, the first limiting block is convexly disposed on the first groove side surface and/or the first mounting side surface, and the second limiting block is convexly disposed on the second groove side surface and/or the second mounting side surface.

Therefore, a manner of machining the first limiting block and the second limiting block may be selected according to a structure of the cellphone and an actual design requirement, so that the manner is suitable for more types of bar phones.

In some embodiments, the first limiting block is convexly disposed on the first groove side surface, the first limiting block is convex relative to the first groove side surface, and one side that is of the first limiting block and that faces away from the first groove side surface abuts against the first mounting side surface; and the second limiting block is fixed on the second groove side surface, the second limiting block is convex relative to the second groove side surface, and one side that is of the second limiting block and that faces away from the second groove side surface abuts against the second mounting side surface

Therefore, in a case in which the middle frame is relatively easy to machine, the first limiting block and the second limiting block are disposed on the middle frame, thereby increasing a product yield and reducing costs.

In some embodiments, the first limiting block is fixed on the first mounting side surface and is convex relative to the first mounting side surface; one side that is of the first limiting block and that faces away from the first mounting side surface abuts against the first groove side surface; the second limiting block is fixed on the second mounting side surface and is convex relative to the second mounting side surface; and one side that is of the second limiting block and that faces away from the second mounting side surface abuts against the second groove side surface.

Therefore, in a case in which the decorative member is relatively easy to machine, the first limiting block and the second limiting block are disposed on the decorative member, thereby increasing a product yield and reducing costs.

In some embodiments, the second structural member further includes a support plate, and the support plate is configured to support a circuit board; a first accommodating cavity is concavely disposed on a side surface of the bearing plate; the first accommodating cavity includes a first cavity surface and a second cavity surface that are disposed opposite to each other; the support plate includes a first end surface and a second end surface that face away from each other; the first accommodating cavity is the mounting groove, the first cavity surface is the first groove surface, the second cavity surface is the second groove surface, the first end surface is the first side, and the second end surface is the second side; the support plate is mounted in the first accommodating cavity, the first cavity surface faces the first end surface, and the second cavity surface faces the second end surface; and the first limiting block is disposed between the first cavity surface and the first end surface, and the second limiting block is disposed between the second cavity surface and the second end surface.

Projections of the first limiting block and the second limiting block on the first end surface are staggered with each other, a part that is between the first cavity surface and the first end surface and that corresponds to the second limiting block is a gap, and the gap forms a first avoidance clearance. A part that is between the second cavity surface and the second end surface and that corresponds to the first limiting block is a gap, and the gap forms a second avoidance clearance. The support plate, the first limiting block, and the second limiting block have elastic deformation performance, and the first avoidance clearance and the second avoidance clearance provide the support plate, the first limiting block, and the second limiting block with deformation spaces. Even if machining precision of the first accommodating cavity of the middle frame, the support plate, the first limiting block, or the second limiting block is slightly poor, the support plate may still be successfully mounted in the first accommodating cavity of the middle frame.

Therefore, a requirement for machining precision of the first accommodating cavity of the middle frame and the support plate is reduced. When the support plate is mounted in the first accommodating cavity of the first decorative member, assembly convenience is improved and assembly precision is high, so that an assembly yield of the support plate and the middle frame is increased, and manufacturing costs are reduced.

In some embodiments, the first limiting block is convexly disposed on the first cavity surface and/or the first end surface, and the second limiting block is convexly disposed on the second cavity surface and/or the second end surface. Therefore, a manner of disposing the first limiting block and the second limiting block may be selected according to a structure of the cellphone and an actual design requirement, thereby improving machining flexibility.

In some embodiments, the first limiting block is convexly disposed on the first cavity surface, and the second limiting block is convexly disposed on the second cavity surface. Therefore, in a case in which the middle frame is relatively easy to machine, the first limiting block and the second limiting block are disposed on the middle frame, thereby increasing a product yield and reducing costs.

In some embodiments, the first limiting block is convexly disposed on the first end surface, and the second limiting block is convexly disposed on the second end surface. Therefore, in a case in which the support plate is relatively easy to machine, the first limiting block and the second limiting block are disposed on the support plate, thereby increasing a product yield and reducing costs.

In some embodiments, the first accommodating cavity further includes a third cavity surface and a fourth cavity surface that are disposed opposite to each other, the third cavity surface is connected between one side of the first cavity surface and one side of the second cavity surface, and the fourth cavity surface is connected between the other side of the first cavity surface and the other side of the second cavity surface; the support plate further includes a third end surface and a fourth end surface that face away from each other, the third end surface is connected between one side of the first end surface and one side of the second end surface, and the fourth end surface is connected between the other side of the first end surface and the other side of the second end surface; the third cavity surface faces the third end surface, and the fourth cavity surface faces the fourth end surface; and the first limiting block is disposed between the third cavity surface and the third end surface, and the second limiting block is disposed between the fourth cavity surface and the fourth end surface.

That is, limiting blocks are disposed between four cavity surfaces of the first accommodating cavity and four end surfaces of the support plate, so that the support plate is more stably mounted in the first accommodating cavity.

In some embodiments, the first limiting block is convexly disposed on the third cavity surface and/or the third end surface, and the second limiting block is convexly disposed on the fourth cavity surface and/or the fourth end surface.

Therefore, a manner of disposing the first limiting block and the second limiting block may be selected according to an actual requirement, so that a machining manner is more flexible.

In some embodiments, the second structural member further includes a camera bracket; an accommodating groove is concavely disposed on a cavity bottom surface of the first accommodating cavity, and the accommodating groove includes a first groove wall surface and a second groove wall surface that are disposed opposite to each other; the camera bracket includes a first peripheral surface and a second peripheral surface that face away from each other; the accommodating groove is the mounting groove, the first groove wall surface is the first groove surface, the second groove wall surface is the second groove surface, the first peripheral surface is the first side, and the second peripheral surface is the second side; at least a part of the camera bracket is mounted in the accommodating groove, the first groove wall surface faces the first peripheral surface, and the second groove wall surface faces the second peripheral surface; and the first limiting block is disposed between the first groove wall surface and the first peripheral surface, and the second limiting block is disposed between the second groove wall surface and the second peripheral surface.

Projections of the first limiting block and the second limiting block on the first peripheral surface are staggered with each other, a part that is between the first groove wall surface and the first peripheral surface and that corresponds to the second limiting block is a gap, and the gap forms a first avoidance clearance. A part that is between the second groove wall surface and the second peripheral surface and that corresponds to the first limiting block is a gap, and the gap forms a second avoidance clearance. The camera bracket, the first limiting block, and the second limiting block all have elastic deformation performance, and the first avoidance clearance and the second avoidance clearance provide the camera bracket, the first limiting block, and the second limiting block with deformation spaces. Even if machining precision of the accommodating groove of the middle frame, the camera bracket, the first limiting block, or the second limiting block is slightly poor, the camera bracket may still be successfully mounted in the accommodating groove of the middle frame.

Therefore, a requirement for machining precision of the camera bracket and the accommodating groove is reduced. When the camera bracket is mounted in the accommodating groove, assembly convenience is improved and assembly precision is high, so that a yield of mounting the camera bracket in the accommodating groove is increased, and manufacturing costs are reduced.

In some embodiments, the first limiting block is convexly disposed on the first groove wall surface and/or the first peripheral surface, and the second limiting block is convexly disposed on the second groove wall surface and/or the second peripheral surface.

Therefore, a manner of disposing the first limiting block and the second limiting block may be selected according to an actual requirement, thereby improving machining flexibility.

In some embodiments, the first limiting block includes a first fixed part and a first limiting part that are fixedly connected, a first limiting groove is concavely disposed on the first groove wall surface, the first fixed part is fastened in the first limiting groove, and the first limiting part extends out of the first limiting groove and is convex relative to the first groove wall surface.

Therefore, it is convenient to perform machining when the first limiting block and the second limiting block are made of a same material but the first limiting block and the middle frame are made of different materials, and the first limiting block and the second limiting block may be separately machined in batches, thereby helping to improve production efficiency.

In some embodiments, the accommodating groove further includes a third groove wall surface and a fourth groove wall surface that are disposed opposite to each other; the third groove wall surface is connected between one side of the first groove wall surface and one side of the second groove wall surface, and the fourth groove wall surface is connected between the other side of the first groove wall surface and the other side of the second groove wall surface; the camera bracket further includes a third peripheral surface and a fourth peripheral surface that face away from each other; the third peripheral surface is connected between one side of the first peripheral surface and one side of the second peripheral surface, and the fourth peripheral surface is connected between the other side of the first peripheral surface and the other side of the second peripheral surface; the third groove wall surface faces the third peripheral surface, and the fourth groove wall surface faces the fourth peripheral surface; and the first limiting block is disposed between the third groove wall surface and the third peripheral surface, and the second limiting block is disposed between the fourth groove wall surface and the fourth peripheral surface.

That is, limiting blocks are disposed between four groove wall surfaces of the accommodating groove and four peripheral surfaces of the camera bracket, so that the camera bracket is more stably mounted in the accommodating groove.

In some embodiments, the first limiting block is convexly disposed on the third groove wall surface and/or the third peripheral surface, and the second limiting block is convexly disposed on the fourth groove wall surface and/or the fourth peripheral surface.

Therefore, a manner of disposing the first limiting block and the second limiting block may be selected according to an actual requirement, so that a machining manner is more flexible. In some embodiments, the first limiting block is convexly disposed on the third groove wall surface, and the second limiting block is convexly disposed on the fourth groove wall surface. In some embodiments, the first limiting block is convexly disposed on the third peripheral surface, and the second limiting block is convexly disposed on the fourth peripheral surface.

In some embodiments, the bar phone further includes a display. The display is stacked on the bearing plate, and is fixed on the bearing plate by using a bonding layer. A part of decorative surface of the decorative part of the decorative member is stacked on an edge of the display, a connection groove is disposed on a decorative surface that is of the decorative part and that faces the display, another bonding layer and a filling layer that are stacked are disposed in the connection groove, the filling layer is fastened in the connection groove by using the another bonding layer, and one side that is of the filling layer and that faces away from the bonding layer is in contact with the edge of the display. Therefore, a slit between the display and the decorative member can be sealed, to prevent foreign matters such as dust and water from entering the cellphone.

### BRIEF DESCRIPTION OF DRAWINGS

To describe technical solutions in embodiments or the background of this application more clearly, the following describes accompanying drawings required in the embodiments or the background of this application.
FIG. 1 is a schematic diagram of a structure of an electronic device in a first state according to an embodiment of this application;
FIG. 2 is a schematic diagram of a structure of an electronic device in a second state according to an embodiment of this application;
FIG. 3 is a schematic diagram of an exploded structure of the electronic device shown in FIG. 2;
FIG. 4 is a schematic diagram of a structure of a first housing of the electronic device shown in FIG. 3;
FIG. 5 is a schematic diagram of an exploded structure of the first housing shown in FIG. 4;
FIG. 6 is a schematic diagram of a structure of a first middle frame of the first housing shown in FIG. 5;
FIG. 7 is a schematic diagram of a cross-sectional structure of FIG. 6 in a direction A-A;
FIG. 8 is an enlarged view of a part A in FIG. 7;
FIG. 9 is a schematic diagram of a structure of a first decorative member of the first housing shown in FIG. 5;
FIG. 10 is a schematic diagram of a cross-sectional structure of FIG. 9 in a direction B-B;
FIG. 11 is a schematic diagram of a structure of a second housing of the electronic device shown in FIG. 4;
FIG. 12 is a schematic diagram of an exploded structure of the second housing shown in FIG. 11;
FIG. 13 is a schematic diagram of a structure of a second middle frame of the second housing shown in FIG. 12;
FIG. 14 is a schematic diagram of a cross-sectional structure of FIG. 13 in a direction C-C;
FIG. 15 is an enlarged view of a part B in FIG. 14;
FIG. 16 is a schematic diagram of a structure of a second decorative member of the second housing shown in FIG. 12;
FIG. 17 is a schematic diagram of a cross-sectional structure of FIG. 16 in a direction D-D;
FIG. 18 is a schematic diagram of a cross-sectional structure of a local part of the electronic device shown in FIG. 2 from another perspective;
FIG. 19 is an enlarged view of a part C in FIG. 18;
FIG. 20 is a schematic diagram of a cross-sectional structure of FIG. 19 in a direction E-E;
FIG. 21 is an enlarged view of a part D in FIG. 18;
FIG. 22 is a schematic diagram of a cross-sectional structure of FIG. 21 in a direction F-F;
FIG. 23 is a schematic diagram of a structure of an electronic device according to another embodiment of this application;
FIG. 24 is a schematic diagram of an exploded structure of the electronic device shown in FIG. 23;
FIG. 25 is a schematic diagram of a structure of a middle frame of the electronic device shown in FIG. 24;
FIG. 26 is an enlarged view of a part E in FIG. 25;
FIG. 27 is a schematic diagram of an exploded structure of FIG. 26;
FIG. 28 is a schematic diagram of a structure of a support plate of the electronic device shown in FIG. 24;
FIG. 29 is a schematic diagram of a structure of a camera module of the electronic device shown in FIG. 24;
FIG. 30 is a schematic diagram of a structure of a local part of the electronic device shown in FIG. 23; and
FIG. 31 is a schematic diagram of a structure of another local part of the electronic device shown in FIG. 23.

### DESCRIPTION OF EMBODIMENTS

An electronic device provided in this application includes but is not limited to a cellphone (cellphone), a notebook computer (notebook computer), a tablet personal computer (tablet personal computer), a personal digital assistant (personal digital assistant), a wearable device (wearable device), or a mobile device (mobile device).

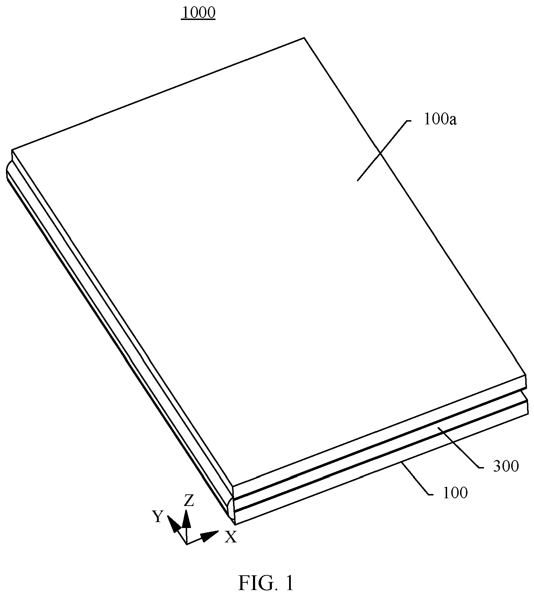

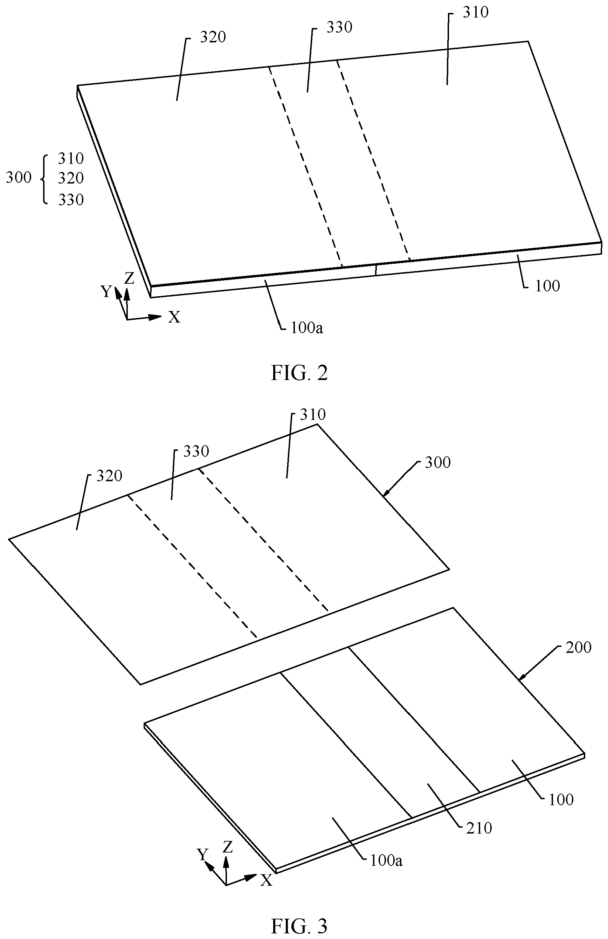

Refer to FIG. 1 and FIG. 2. FIG. 1 is a schematic diagram of a structure of an electronic device in a first state according to an embodiment of this application. FIG. 2 is a schematic diagram of a structure of an electronic device in a second state according to an embodiment of this application.

In an embodiment of this application, an example in which an electronic device 1000 is a foldable cellphone is used for description.

For ease of description, a width direction of the electronic device 1000 is defined as an X-axis direction, a length direction of the electronic device 1000 is defined as a Y-axis direction, and a thickness direction of the electronic device 1000 is defined as a Z-axis direction. Every two of the X-axis direction, the Y-axis direction, and the Z-axis direction are perpendicular to each other.

The electronic device 1000 includes at least a first structural member and a second structural member. A mounting groove is disposed on the first structural member, the mounting groove includes a first groove surface and a second groove surface that are distributed opposite to each other, and the second structural member includes a first side and a second side that face away from each other. At least a part of the second structural member is mounted in the mounting groove, the first side faces the first groove surface, the second side faces the second groove surface, a first limiting block is disposed between the first side and the first groove surface, a second limiting block is disposed between the second side and the second groove surface, and projections of the first limiting block and the second limiting block on the first side are staggered with each other. The first limiting block is convexly disposed on the first side and/or the first groove surface, the second limiting block is convexly disposed on the second side and/or the second groove surface, a gap that is between the first side and the first groove surface and that corresponds to the second limiting block forms a first avoidance clearance, and a gap that is between the second side and the second groove surface and that corresponds to the first limiting block forms a second avoidance clearance. The second structural member, the first limiting block, and the second limiting block all have elastic deformation performance, and the first avoidance clearance and the second avoidance clearance provide the second structural member, the first limiting block, and the second limiting block with deformation spaces. Therefore, the first limiting block and the second limiting block may be deformed when the first structural member and the second structural member are assembled, to facilitate assembly of the first structural member and the second structural member. The second structural member, the first limiting member, and the second limiting member may be made of a material with elastic deformation performance, for example, plastic. In this embodiment, the projections of the first limiting block and the second limiting block on the first side are completely staggered. In another embodiment, the projections of the first limiting block and the second limiting block on the first side are partially staggered. The projections of the first limiting block and the second limiting block on the first side may be orthographic projections of the first limiting block and the second limiting block on the first side.

The following describes this embodiment in detail with reference to the accompanying drawings. The electronic device 1000 includes a main body 200 and a display 300. The display 300 is mounted on the main body 200. The display 300 includes a display surface and a mounting surface, and the display surface and the mounting surface face away from each other. The display surface is configured to display a text, an image, a video, and the like. The display 300 includes a first display region 310, a second display region 320, and a third display region 330. The third display region 330 is located between the first display region 310 and the second display region 320, and the third display region 330 is flexible and may be bent in the X-axis direction. In this embodiment, the display 300 is a flexible display. The first display region 310 and the second display region 320 may actually be bent when not being fastened.

In this embodiment, the display 300 is a flexible display, for example, an organic light-emitting diode (organic light-emitting diode, OLED) display, or a passive-matrix organic light-emitting diode or an active-matrix organic light-emitting diode (active-matrix organic light-emitting diode, AMOLED) display.

The main body 200 includes a first housing 100, a second housing 100a, and a rotating mechanism 210. The rotating mechanism 210 is mounted on the first housing 100 and the second housing 100a, and the rotating mechanism 210 is fixedly connected to the first housing 100 and the second housing 100a, to implement rotatable connection between the first housing 100 and the second housing 100a. The first housing 100 and the second housing 100a may be rotated relative to each other by using the rotating mechanism 210, so that the main body 200 can be switched between a folded state and an unfolded state.

The display 300 is mounted on the main body 200, and the mounting surface is fixedly connected to the main body 200. Specifically, the first housing 100 bears the first display region 310, and the second housing 100a bears the second display region 320. In other words, the first display region 310 is mounted on the first housing 100, and the second display region 320 is mounted on the second housing 100a. The rotating mechanism 210 is disposed opposite to the third display region 330, to bend the display 300.

Relative rotation between the first housing 100 and the second housing 100a enables the main body 200 to be in the folded state, which means that the first housing 100 and the second housing 100a are rotated by using the rotating mechanism 210 and approach each other, and surfaces that are of the first housing 100 and the second housing 100a and that bear the display 300 are opposite to each other. During application, when the main body 200 is in a completely folded state, after the display 300 mounted on the first housing 100 and the second housing 100a is folded, a display surface that is of the display 300 and that is located in the first display region 310 and a display surface that is of the display 300 and that is located in the second display region 320 are partially or completely in contact. Relative rotation between the first housing 100 and the second housing 100a enables the main body 200 in an unfolding process (the first housing 100 and the second housing 100a may stay at any angle, for example, the first housing 100 and the second housing 100a form an included angle of 90 degrees, 120 degrees, or the like, that is, the display 300 is in a half-unfolded state). The first housing 100 and the second housing 100a are rotated by using the rotating mechanism 210, and kept away from each other, and the included angle between the first housing 100 and the second housing 100a is increasingly large until the main body 200 is fully unfolded to the unfolded state due to relative rotation between the first housing 100 and the second housing 100a. The included angle between the first housing 100 and the second housing 100a may be approximately 180 degrees or equal to 180 degrees. The first housing 100 and the second housing 100a are roughly in a flat plate state. In addition, the first housing 100 and the second housing 100a are kept away from each other, so that the display 300 is driven to be unfolded until the electronic device 1000 is in the unfolded state. The first housing 100 and the second housing 100a are kept away from each other, so that the display 300 is driven to be further unfolded until the electronic device 1000 is in the unfolded state.

Refer to FIG. 3. FIG. 3 is a schematic diagram of an exploded structure of the electronic device shown in FIG. 2. The first housing 100 and the second housing 100a are rotated relative to each other by using the rotating mechanism 210. When the electronic device 1000 is in the unfolded state, the display 300 has a display region with a large area, so that large-screen display and operation functions of the electronic device 1000 are implemented, thereby improving user experience. Refer to FIG. 1. When the electronic device 1000 is in the folded state, the display 300 is located between the first housing 100 and the second housing 100a, and the first housing 100 and the second housing 100a protect the display surface of the display 300, thereby greatly reducing a probability that the display 300 is damaged, reducing an overall size, and facilitating portability.

It should be noted that orientation words such as "top" and "bottom" used in the embodiments of this application to describe the electronic device 1000 are mainly described based on a display orientation of the electronic device 1000 shown in FIG. 2, with "top" facing a positive direction of a Z axis and "bottom" facing a negative direction of the Z axis. This does not limit an orientation of the electronic device 1000 in an actual application scenario.

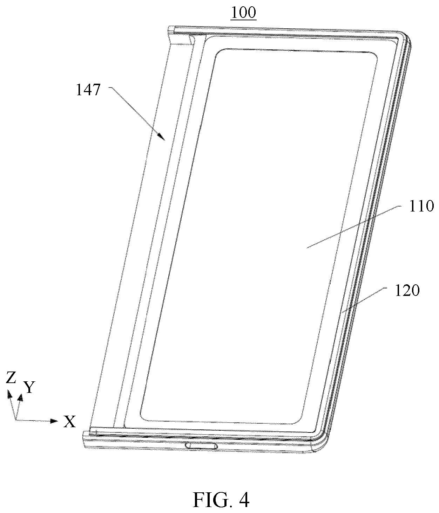

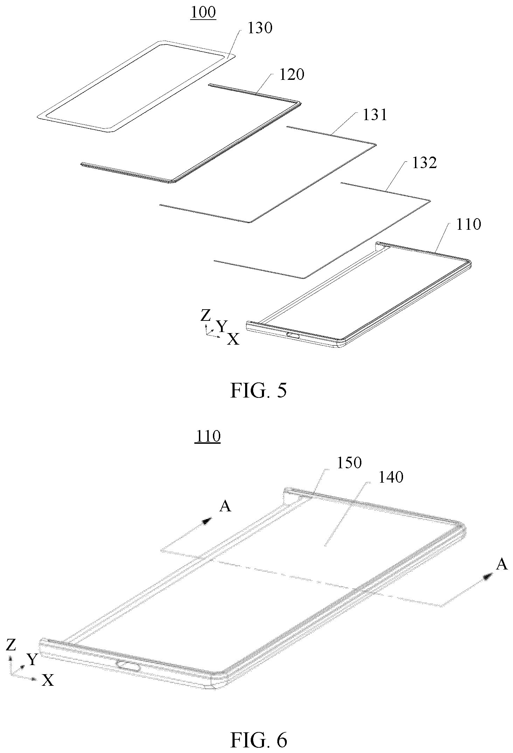

Refer to FIG. 4 and FIG. 5. FIG. 4 is a schematic diagram of a structure of the first housing of the electronic device shown in FIG. 3. FIG. 5 is a schematic diagram of an exploded structure of the first housing shown in FIG. 4.

In this embodiment, the first housing 100 includes a first back cover (not shown in the figure), a first middle frame 110, a first decorative member 120, a first bonding layer 130, a second bonding layer 131, and a first filling layer 132. A part of the third display region of the display and the first display region are mounted on one side of the first middle frame 110, the first back cover is fixed on one side that is of the first middle frame 110 and that faces away from the display, and the first middle frame 110 and the first back cover form a first accommodating cavity (not shown in the figure).

The first accommodating cavity is configured to mount components such as a first circuit board, a processor, a memory, and a communication module. The processor, the memory, and the communication module are integrated on the first circuit board. The memory and the communication module are separately electrically connected to the processor. The memory is configured to store instructions and data. The communication module may implement wireless communication of the cellphone, such as 3G/4G/5G. The communication module may further implement wireless communication of the cellphone, such as a wireless local area network (wireless local area networks, WLAN), Bluetooth (bluetooth, BT), and near field communication (near field communication, NFC). The first accommodating cavity may be further configured to mount a component that implements another function. This is not listed herein.

The first decorative member 120 is mounted on the first middle frame 110, and is fixedly connected to the display, so that an appearance of the electronic device is flatter. The first bonding layer 130 is configured to connect to the display 300 and the first middle frame 110, the second bonding layer 131 is located between the first decorative member 120 and the first filling layer 132, and the second bonding layer 131 is configured to connect to the first decorative member 120 and the first filling layer 132. The first filling layer 132 is located between the display 300 and the second bonding layer 131. The first filling layer 132 is configured to fill a slit between the first decorative member 120 and the display 300. The first decorative member 120 is made of plastic, and has elastic deformation performance.

A length outline of the first bonding layer 130 is in a "⊐" shape, and the first bonding layer 130 is an adhesive material. A length outline of the second bonding layer 131 is in a "⊐" shape, and the second bonding layer 131 is an adhesive material. A length outline of the first filling layer 132 is in a "⊐" shape, and the first filling layer 132 is made of foam. In another embodiment, the second bonding layer 131 may be rectangular, wavy, or the like.

Refer to FIG. 6. FIG. 6 is a schematic diagram of a structure of the first middle frame of the first housing shown in FIG. 5.

In this embodiment, the first middle frame 110 includes a first bearing plate 140 and a first frame body 150. The first bearing plate 140 and the first frame body 150 may be formed integrally, or may be formed separately and then assembled into the first middle frame 110. The first bearing plate 140 is a thin plate in a " 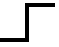 " shape.

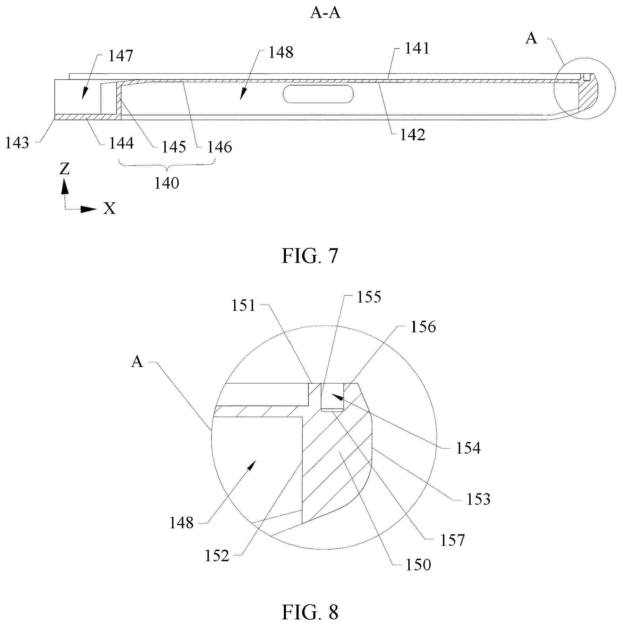

Refer to FIG. 7. FIG. 7 is a schematic diagram of a cross-sectional structure of FIG. 6 in a direction A-A.

The first bearing plate 140 includes a first surface 141 and a second surface 142 that face away from each other in the Z-axis direction, a first side surface 143 and a second side surface (not shown in the figure) that face away from each other in the X-axis direction, and a first end surface (not shown in the figure) and a second end surface (not shown in the figure) that face away from each other in the Y-axis direction, and the first surface 141 and the second surface 142 are in a " 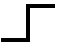 " shape.

The first bearing plate 140 includes a first bottom part 144, a first bent part 145, and a first support part 146. The first bent part 145 extends in the Z-axis direction. The first bottom part 144 and the first support part 146 are respectively fixed on two sides of the first bent part 145, and extend in opposite directions. The first bottom part 144 extends in a negative direction of an X-axis, and the first bent part 145 extends in a positive direction of the X-axis. A part of the first surface 141 is located on the first bottom part 144, another part of the first surface 141 is located on the first bent part 145, and still another part of the first surface 141 is located on the first support part 146. A part of the second surface 142 is located on the first bottom part 144, another part of the second surface 142 is located on the first bent part 145, and still another part of the second surface 142 is located on the first bent part 145.

A concave part formed after the first bottom part 144 is connected to the first bent part 145 forms a first receiving groove 147, groove wall surfaces of the first receiving groove 147 are a part that is of the first surface 141 and that is located on the first bottom part 144 and a part that is of the first surface 141 and that is located on the first bent part 145, and the first receiving groove 147 is configured to mount the rotating mechanism. A concave part formed after the first bent part 145 is connected to the first support part 146 forms a first space 148, the first space 148 is configured to fit with the first back cover to form the first accommodating cavity, and space wall surfaces of the first space 148 are a part that is of the second surface 142 and that is located on the first bent part 145 and a part that is of the second surface 142 and that is located on the first support part 146. A part that is of the first surface 141 and that is located on the first support part 146 is configured to connect to and support the first display region 310 of the display 300.

Refer to FIG. 8. FIG. 8 is an enlarged view of a part A in FIG. 7. FIG. 8 mainly shows a structure of the first frame body 150.

In this embodiment, the first frame body 150 is an unsealed frame, that is, a length outline of the first frame body 150 is in a "⊐" shape. The first frame body 150 is disposed around a periphery of the first bearing plate 140. The first frame body 150 is made of metal or plastic.

The first frame body 150 has a first fitting surface 151, a first inner side surface 152, and a first outer side surface 153. The first inner side surface 152 and the first outer side surface 153 face away from each other, and have length outlines in a "⊐" shape. The first fitting surface 151 is connected between the first inner side surface 152 and the first outer side surface 153. The first inner side surface 152 is fixedly connected to the first end surface, the second end surface, and the second side surface of the first bearing plate 140. The first fitting surface 151 is parallel to the first surface 141 of the first support part 146. The first outer side surface 153 is a part of an appearance surface of the electronic device.

A first fitting groove 154 is disposed on the first frame body 150, and the first fitting groove 154 is formed through downward recession of a part of the first fitting surface 151. It can be understood that the first fitting groove 154 is concavely disposed on the first fitting surface 151. A length outline of the first fitting groove 154 is in a "⊐" shape. The first fitting groove 154 is configured to mount the first decorative member 120. The first fitting groove 154 has a first groove side surface 155, a second groove side surface 156, and a first groove bottom surface 157, the first groove side surface 155 and the second groove side surface 156 are disposed opposite to each other, an inner side of the first groove bottom surface 157 is connected to the first groove side surface 155, and an outer side of the first groove bottom surface 157 is connected to the second groove side surface 156. The first groove side surface 155 and the first inner side surface 152 face away from each other, and the second groove side surface 156 and the first outer side surface 153 face away from each other.

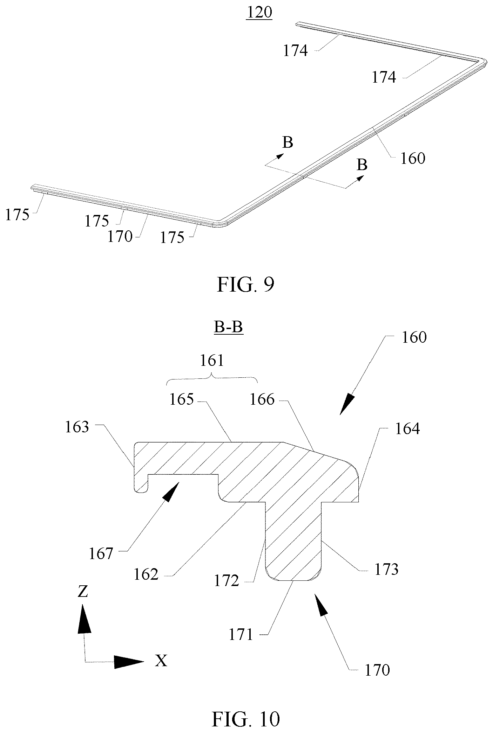

Refer to FIG. 9 and FIG. 10. FIG. 9 is a schematic diagram of a structure of the first decorative member of the first housing shown in FIG. 5. FIG. 10 is a schematic diagram of a cross-sectional structure of FIG. 9 in a direction B-B.

In this embodiment, the first decorative member 120 is an unsealed frame, that is, a length outline of the first decorative member 120 is in a "⊐" shape. The first decorative member 120 includes a first decorative part 160 and a first mounting part 170 that are stacked and fastened in the Z-axis direction, and length outlines of the first decorative part 160 and the first mounting part 170 are in a "⊐" shape. The first decorative member 120 is made of plastic.

The first decorative part 160 includes a first decorative surface 161, a second decorative surface 162, a first decorative side surface 163, and a second decorative side surface 164. The first decorative surface 161 and the second decorative surface 162 face away from each other in the Z-axis direction, the first decorative surface 161 is a top surface of the first decorative part 160, and the second decorative surface 162 is a bottom surface of the first decorative part 160. The first decorative side surface 163 is connected to the first decorative surface 161 and the second decorative surface 162, and the second decorative side surface 164 is connected to the first decorative surface 161 and the second decorative surface 162. Actually, the first decorative side surface 163 is an inner side surface of the first decorative part 160, and the second decorative side surface 164 is an outer side surface of the first decorative part 160. The first decorative surface 161 and the second decorative side surface 164 are parts of the appearance surface of the electronic device.

The first decorative surface 161 includes a first flat surface segment 165 and a first curved surface segment 166, one side of the first flat surface segment 165 is connected to the first decorative side surface 163, the other side of the first flat surface segment 165 is connected to the first curved surface segment 166, and the first curved surface segment 166 is connected to the second decorative side surface 164. The first curved surface segment 166 is smoothly connected to the first outer side surface 153 of the first frame body 150, so that the appearance of the electronic device is smoother, thereby avoiding scratching a user and improving appearance aesthetics.

A first connection groove 167 is disposed on the first decorative part 160, and the first connection groove 167 is formed through recession of the second decorative surface 162 in a direction toward the first decorative surface 161. It can be understood that the first connection groove 167 is concavely disposed on the second decorative surface 162. The first connection groove 167 is configured to mount a component connected to the display 300 and the first decorative member 120.

The first mounting part 170 is convexly disposed on the second decorative surface 162, that is, the first mounting part 170 is formed through protrusion of the second decorative surface 162 in a direction away from the first decorative surface 161. The first mounting part 170 includes a first mounting bottom surface 171, a first mounting side surface 172, and a second mounting side surface 173. The first mounting bottom surface 171 faces away from the second decorative surface 162, and the first mounting side surface 172 is connected to the second decorative surface 162 and one side of the first mounting bottom surface 171. The second mounting side surface 173 is connected to the second decorative surface 162 and the other side of the first mounting bottom surface 171. The first mounting side surface 172 is an inner side surface of the first mounting part 170, and the second mounting side surface 173 is an outer side surface of the first mounting part 170.

In this embodiment, still refer to FIG. 9, a first limiting block 174 and a second limiting block 175 are disposed on the first mounting part 170, the first limiting block 174 is formed through protrusion in a direction in which the first mounting side surface 172 is away from the second mounting side surface 173, and the second limiting block 175 is formed through protrusion along the second mounting side surface 173 away from the first mounting side surface 172. In other words, the first limiting block 174 is convexly disposed on the first mounting side surface 172, and the second limiting block 175 is convexly disposed on the second mounting side surface 173. The first limiting block 174 and the second limiting block 175 are staggered in a length direction of the first mounting part 170. The length direction of the first mounting part 170 is a direction around the Z-axis direction. The first mounting part 170 is configured to fit with the first fitting groove 154, the first limiting block 174 is configured to fit with the first groove side surface 155, and the second limiting block 175 is configured to fit with the second groove side surface 156. The first limiting block 174 may be square, triangular, oval, circular, or the like, and the second limiting block 175 may be square, triangular, oval, circular, or the like.

In another embodiment, the first limiting block and the second limiting block are disposed on the first decorative part 160. The first limiting block and the second limiting block are located in the first fitting groove 154. Specifically, the first limiting block is convexly disposed on the first groove side surface 155, and the second limiting block is convexly disposed on the second groove side surface 156. Alternatively, the first limiting block is disposed on the first decorative part 160. The first limiting block is located in the first fitting groove 154. Specifically, the first limiting block is convexly disposed on the first groove side surface 155. The second limiting block is convexly disposed on the second mounting side surface 173. Alternatively, the second limiting block is disposed on the first decorative part 160. The second limiting block is located in the first fitting groove 154. Specifically, the second limiting block is convexly disposed on the second groove side surface 156. The first limiting block is convexly disposed on the first mounting side surface 172. Regardless of a deposition manner, the first limiting block and the second limiting block are staggered in the length direction of the first decorative member 120.

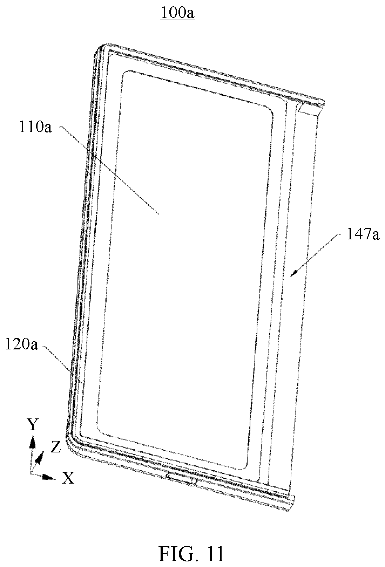

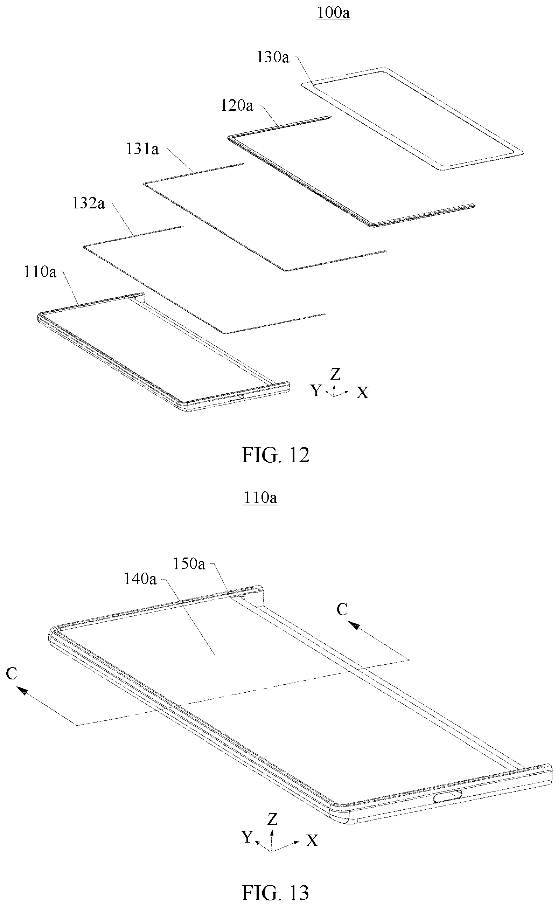

Refer to FIG. 11 and FIG. 12. FIG. 11 is a schematic diagram of a structure of the second housing in the electronic device shown in FIG. 4, and FIG. 12 is a schematic diagram of an exploded structure of the second housing shown in FIG. 11.

In this embodiment, the structure of the second housing 100a is the same as the structure of the first housing 100, and the second housing 100a includes a second back cover (not shown in the figure), a second middle frame 110a, a second decorative member 120a, a third bonding layer 130a, a fourth bonding layer 131a, and a second filling layer 132a. A part of the third display region 330 of the display 300 and the second display region 320 are mounted on the second middle frame 110a, the second back cover is fixed on one side that is of the second middle frame 110a and that faces away from the display, and the second middle frame 110a and the second back cover form a second accommodating cavity (not shown in the figure).

The second accommodating cavity is configured to mount components such as a second circuit board, a battery, an antenna, a motor, and a sensor module. The antenna, the motor, and the sensor module are integrated on the second circuit board. The battery and the second circuit board are stacked or disposed in parallel. Stacking disposition can save a space, and parallel disposition can avoid heating up of the cellphone that is caused by heat accumulation of the battery and the second circuit board. The battery provides electrical energy for other components such as the motor, the sensor module, the antenna, and the display, to ensure normal use of the cellphone. The motor may generate a vibration alert, which may be specifically used for an incoming call vibration alert, or used for touch vibration feedback. The sensor module includes a gyroscope sensor, a temperature sensor, and the like. The gyroscope sensor may be configured to determine a motion posture of the cellphone. The temperature sensor is configured to detect a temperature, so that the processor executes a temperature processing policy based on the temperature detected by the temperature sensor, to prevent an exception caused by overheating or a low temperature of the cellphone.

The second accommodating cavity may be further configured to mount a component that implements another function. This is not listed herein. A communication function between the first circuit board and the second circuit board may be implemented by using a flexible printed circuit.

The second decorative member 120a is mounted on the second middle frame 110a, and is fixedly connected to the display 300, so that the appearance of the electronic device 1000 is flatter. The third bonding layer 130a is configured to connect to the display 300 and the second middle frame 110a, the fourth bonding layer 131a is located between the second decorative member 120a and the second filling layer 132a, the fourth bonding layer 131a is configured to connect to the second decorative member 120a and the second filling layer 132a, the second filling layer 132a is located between the display 300 and the fourth bonding layer 131a, and the second filling layer 132a is configured to fill a slit between the second decorative member 120a and the display 300.

In this embodiment, a length outline of the third bonding layer 130a is in a "⊏" shape, and the third bonding layer 130a is an adhesive material. A length outline of the fourth bonding layer 131a is in a "⊏" shape, and the fourth bonding layer 131a is an adhesive material. A length outline of the second filling layer 132a is in a "⊏" shape, and the second filling layer 132a is made of foam. In another embodiment, the fourth bonding layer 131a may be rectangular, wavy, or the like.

Refer to FIG. 13. FIG. 13 is a schematic diagram of a structure of the second middle frame of the second housing shown in FIG. 12.

In this embodiment, the structure of the second middle frame 110a is the same as the structure of the first middle frame 110. The second middle frame 110a includes a second bearing plate 140a and a second frame body 150a. The second bearing plate 140a and the second frame body 150a may be formed integrally, or may be formed separately and then assembled into the second middle frame 110a. The second bearing plate 140a is a thin plate in a " 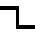 " shape.

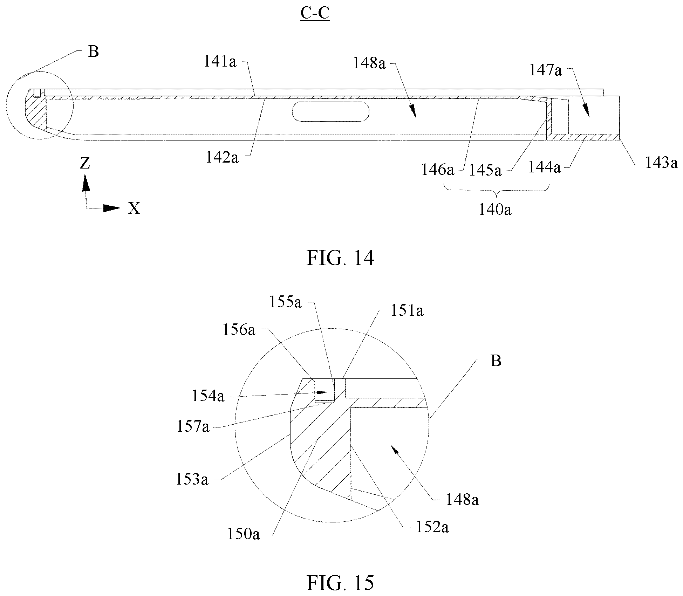

Refer to FIG. 14. FIG. 14 is a schematic diagram of a cross-sectional structure of FIG. 13 in a direction C-C.

A structure of the second bearing plate 140a is the same as a structure of the first bearing plate 140. The second bearing plate 140a includes a third surface 141a and a fourth surface 142a that face away from each other in the Z-axis direction, a third side surface 143a and a fourth side surface (not shown in the figure) that face away from each other in the X-axis direction, and a third end surface (not shown in the figure) and a fourth end surface (not shown in the figure) that face away from each other in the Y-axis direction. The third surface 141a and the fourth surface 142a are in a " 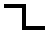 " shape.

The second bearing plate 140a includes a second bottom part 144a, a second bent part 145a, and a second support part 146a. The second bent part 145a extends in the Z-axis direction. The second bottom part 144a and the second support part 146a are respectively fixed on two sides of the second bent part 145a, and extend in opposite directions. The second bottom part 144a extends in the negative direction of the X-axis, and the second bent part 145a extends in the positive direction of the X-axis. A part of the third surface 141a is located on the second bottom part 144a, another part of the third surface 141a is located on the second bent part 145a, and still another part of the third surface 141a is located on the second support part 146a. A part of the fourth surface 142a is located on the second bottom part 144a, another part of the fourth surface 142a is located on the second bent part 145a, and still another part of the fourth surface 142a is located on the second support part 146a.

A concave part formed after the second bottom part 144a is connected to the second bent part 145a forms a second receiving groove 147a, the second receiving groove 147a, groove wall surfaces of the second receiving groove 147a are a part that is of the third surface 141a and that is located on the second bottom part 144a and a part that is of the third surface 141a and that is located on the second bent part 145a, and the second receiving groove 147a is configured to mount the rotating mechanism. A concave part formed after the second bent part 145a is connected to the second support part 146a forms a second space 148a, the second space 148a is configured to fit with the second back cover to form the second accommodating cavity, and space wall surfaces of the second space 148a are a part that is of the fourth surface 142a and that is located on the second bent part 145a and a part that is of the fourth surface 142a and that is located on the second support part 146a. The third surface 141a of the second support part 146a is configured to connect to and support the second display region 320 of the display 300.

Refer to FIG. 15. FIG. 15 is an enlarged view of a part B in FIG. 14. FIG. 15 mainly shows a structure of the second frame body 150a.

In this embodiment, the structure of the second frame body 150a is the same as the structure of the first frame body 150. The second frame body 150a is an unsealed frame, that is, a length outline of the second frame body 150a is in a "⊏" shape. The second frame body 150a is made of metal or plastic.

The second frame body 150a has a second fitting surface 151a, a second inner side surface 152a, and a second outer side surface 153a. The second inner side surface 152a and the second outer side surface 153a face away from each other, and have length outlines in a "⊐" shape. The second fitting surface 151a is connected between the second inner side surface 152a and the second outer side surface 153a, the second inner side surface 152a is fixedly connected to the third end surface, the fourth end surface, and the fourth side surface of the second bearing plate 140a, and the second fitting surface 151a is parallel to the third surface 141a of the second support part 146a. The second outer side surface 153a is a part of the appearance surface of the electronic device.

A second fitting groove 154a is disposed on the second frame body 150a, and the second fitting groove 154a is formed through downward recession of a part of the second fitting surface 151a. It can be understood that the second fitting groove 154a is concavely disposed on the second fitting surface 151a. Alength outline of the second fitting groove 154a is in a "⊏" shape. The second fitting groove 154a is configured to mount the second decorative member 120a. The second fitting groove 154a has a third groove side surface 155a, a fourth groove side surface 156a, and a second groove bottom surface 157a, the third groove side surface 155a and the fourth groove side surface 156a are disposed opposite to each other, an inner side of the second groove bottom surface 157a is connected to the third groove side surface 155a, and an outer side of the second groove bottom surface 157a is connected to the fourth groove side surface 156a. The third groove side surface 155a and the second inner side surface 152a face away from each other, and the fourth groove side surface 156a and the second outer side surface 153a face away from each other.

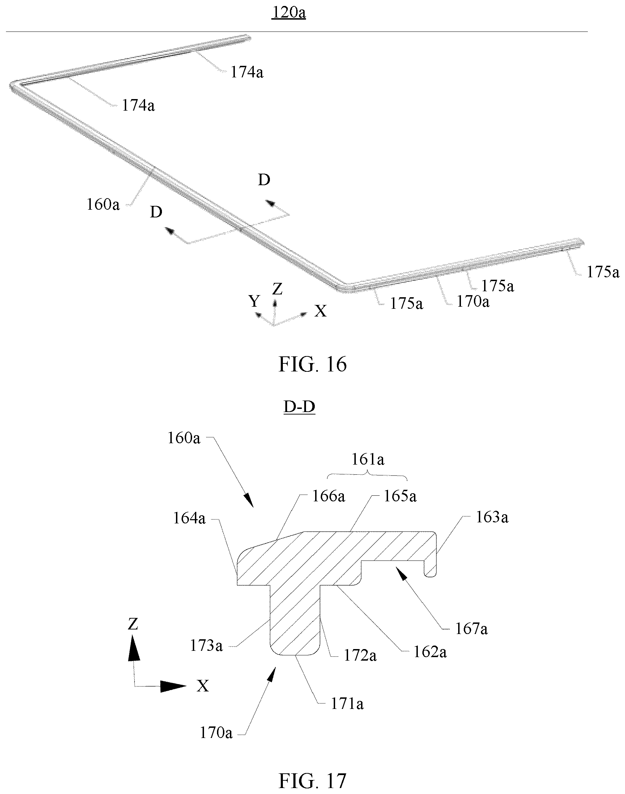

Refer to FIG. 16 and FIG. 17. FIG. 16 is a schematic diagram of a structure of the second decorative member of the second housing shown in FIG. 12. FIG. 17 is a schematic diagram of a cross-sectional structure of FIG. 16 in a direction D-D.

In this embodiment, the structure of the second decorative member 120a is the same as the structure of the first decorative member 120. The second decorative member 120a is an unsealed frame, that is, a length outline of the second decorative member 120a is in a "⊏" shape. The second decorative member 120a includes a second decorative part 160a and a second mounting part 170a that are stacked and fastened in the Z-axis direction, and length outlines of the second decorative part 160a and the second mounting part 170a are in a "⊏" shape. The second decorative member 120a is made of plastic, and has elastic deformation performance.

The second decorative part 160a includes a third decorative surface 161a, a fourth decorative surface 162a, a third decorative side surface 163a, and a fourth decorative side surface 164a. The third decorative surface 161a and the fourth decorative surface 162a face away from each other in the Z-axis direction, the third decorative surface 161a is a top surface of the second decorative part 160a, and the fourth decorative surface 162a is a bottom surface of the second decorative part 160a. The third decorative side surface 163a is connected to the third decorative surface 161a and the fourth decorative surface 162a. The fourth decorative side surface 164a is connected to the third decorative surface 161a and the fourth decorative surface 162a. Actually, the third decorative side surface 163a is an inner side surface of the second decorative part 160a, and the fourth decorative side surface 164a is an outer side surface of the second decorative part 160a. The third decorative surface 161a and the fourth decorative side surface 164a are parts of the appearance surface of the electronic device.

The third decorative surface 161a includes a second flat surface segment 165a and a second curved surface segment 166a, one side of the second flat surface segment 165a is connected to the third decorative side surface 163a, the other side of the second flat surface segment 165a is connected to the second curved surface segment 166a, and one side of the second curved surface segment 166a is connected to the fourth decorative side surface 164a. The second curved surface segment 166a is smoothly connected to the second outer side surface 153a of the second frame body 150a, so that the appearance of the electronic device is smoother, thereby avoiding scratching the user and improving appearance aesthetics.

A second connection groove 167a is disposed on the second decorative part 160a, and the second connection groove 167a is formed through recession of the fourth decorative surface 162a in a direction toward the third decorative surface 161a. It can be understood that the second connection groove 167a is concavely disposed on the fourth decorative surface 162a. The second connection groove 167a is configured to mount a component connected to the display 300 and the second decorative member 120a.

The second mounting part 170a is convexly disposed on the fourth decorative surface 162a, that is, the second mounting part 170a is formed through protrusion of the fourth decorative surface 162a in a direction away from the third decorative surface 161a. The second mounting part 170a includes a second mounting bottom surface 171a, a third mounting side surface 172a, and a fourth mounting side surface 173a. The second mounting bottom surface 171a faces away from the fourth decorative surface 162a, and the third mounting side surface 172a is connected to the fourth decorative surface 162a and one side of the second mounting bottom surface 171a. The fourth mounting side surface 173a is connected to the fourth decorative surface 162a and one side of the second mounting bottom surface 171a. The third mounting side surface 172a is an inner side surface of the second mounting part 170a, and the fourth mounting side surface 173a is an outer side surface of the second mounting part 170a.

In this embodiment, a first limiting block 174a and a second limiting block 175a are disposed on the second mounting part 170a, the first limiting block 174a is formed through protrusion in a direction in which the third mounting side surface 172a is away from the fourth mounting side surface 173a, and the second limiting block 175a is formed through protrusion along the fourth mounting side surface 173a away from the third mounting side surface 172a. In other words, the first limiting block 174a is convexly disposed on the third mounting side surface 172a, and the second limiting block 175a is convexly disposed on the fourth mounting side surface 173a.

The first limiting block 174a and the second limiting block 175a are staggered in a length direction of the second mounting part 170a. The length direction of the second mounting part 170a is a direction around the Z-axis direction. The second mounting part 170a is configured to fit with the second fitting groove 154a, the first limiting block 174a is configured to fit with the third groove side surface 155a, and the second limiting block 175a is configured to fit with the fourth groove side surface 156a. The first limiting block 174a may be square, triangular, oval, circular, or the like, and the second limiting block 175a may be square, triangular, oval, circular, or the like.

In another embodiment, the first limiting block and the second limiting block are disposed on the second decorative part 160a. The first limiting block and the second limiting block are located in the second fitting groove 154a. Specifically, the first limiting block is convexly disposed on the third groove side surface 155a, and the second limiting block is convexly disposed on the fourth groove side surface 156a. Alternatively, the first limiting block is disposed on the second decorative part 160a, and the second limiting block is disposed on the second mounting part 170a. Specifically, the first limiting block is convexly disposed on the third groove side surface 155a, and the second limiting block is convexly disposed on the fourth mounting side surface 173a. Alternatively, the second limiting block is disposed on the second decorative part 160a, and the first limiting block is disposed on the second mounting part 170a. Specifically, the second limiting block is convexly disposed on the fourth groove side surface 156a, and the first limiting block is convexly disposed on the third mounting side surface 172a. Alternatively, the first limiting block and the second limiting block are disposed on the second decorative part 160a. In addition, the first limiting block and the second limiting block are disposed on the second mounting part 170a. Regardless of a deposition manner, the first limiting block and the second limiting block are staggered in the length direction of the second decorative member.

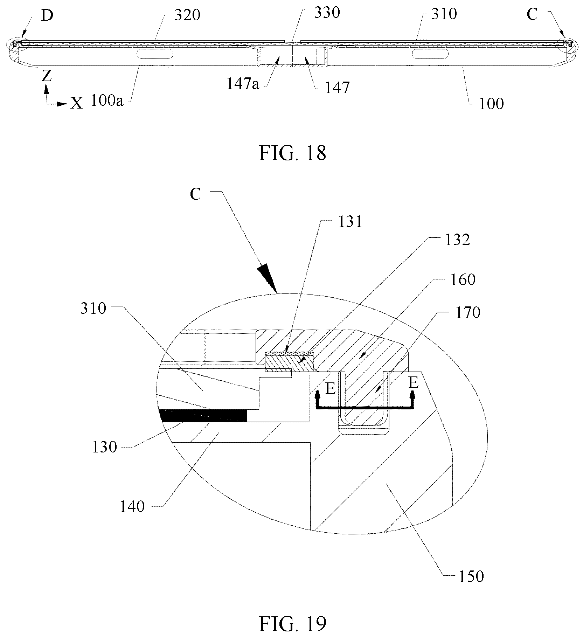

Refer to FIG. 18. FIG. 18 is a schematic diagram of a cross-sectional structure of a local part of the electronic device shown in FIG. 2 from another perspective.

In this embodiment, the first middle frame 110 and the second middle frame 110a are disposed side by side, and the first receiving groove 147 on the first bearing plate 140 is opposite to the second receiving groove 147a on the second bearing plate 140a to form a receiving cavity. The receiving cavity is configured to mount the rotating mechanism, so that the first middle frame 110 and the second middle frame 110a are connected by using the rotating mechanism. The first frame body 150 and the first bearing plate 140 bear the first display region 310, the second frame body 150a and the second bearing plate 140a bear the second display region 320, and the rotating mechanism 210 bears the third display region 330.

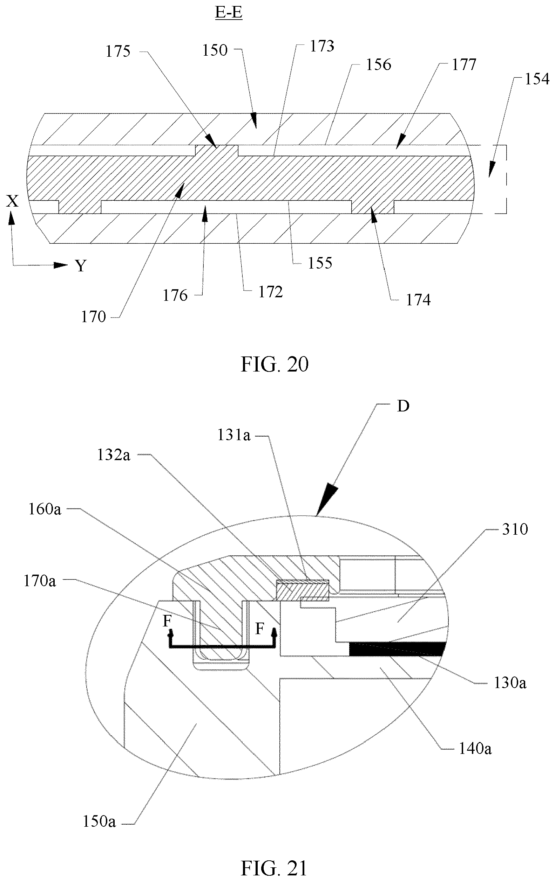

Refer to FIG. 19 and FIG. 20. FIG. 19 is an enlarged view of a part C in FIG. 18. FIG. 20 is a schematic diagram of a cross-sectional structure of FIG. 19 in a direction E-E.

The first display region 310 of the display 300 is fixed on the first surface 141 of the first bearing plate 140 by using the first bonding layer 130. Specifically, the first bonding layer 130 is bonded between a mounting surface of the first display region 310 and the first surface 141.

The first decorative member 120 is mounted on the first frame body 150, and is fixedly connected to the display 300. Specifically, the first mounting part 170 is located in the first fitting groove 154, the first mounting bottom surface 171 faces the first groove bottom surface 157, the first mounting side surface 172 and the first limiting block 174 face the first groove side surface 155, and a fit clearance between the first limiting block 174 and the first groove side surface 155 is between 0 millimeters and 0.03 millimeter. The second mounting side surface 173 and the second limiting block 175 face the second groove side surface 156, and a fit clearance between the second limiting block 175 and the second groove side surface 156 is between 0 millimeters and 0.03 millimeter.

The first limiting block 174 and the second limiting block 175 are staggered in the length direction of the first decorative member 120 (the first limiting block 174 and the second limiting block 175 are not overlapped in the X-axis direction), that is, projections of the first limiting block 174 and the second limiting block 175 on the first mounting side surface 172 are staggered with each other. Therefore, a gap that is between the first mounting side surface 172 and the first groove side surface 155 and that corresponds to the second limiting block 175 forms a first avoidance clearance 176. In other words, a gap between two adjacent first limiting blocks 174 is the first avoidance clearance 176. A gap that is between the second mounting side surface 173 and the second groove side surface 156 and that corresponds to the first limiting block 174 forms a second avoidance clearance 177. In other words, a gap between two adjacent second limiting blocks 175 is the second avoidance clearance 177.

When the first mounting part 170 of the first decorative member 120 is assembled in the first fitting groove 154, if a sum of width sizes of the first limiting block 174, the second limiting block 175, and the first mounting part 170 in the X-axis direction is slightly greater than a width size of the first fitting groove 154 in the X-axis direction due to reasons such as a machining error (for example, sizes of one or more first limiting blocks 174 are slightly wide in the X-axis direction, sizes of one or more second limiting blocks 175 are slightly wide in the X-axis direction, or a size of the first mounting part 170 is slightly wide in the X-axis direction). The first limiting block 174 and a part of the first mounting part 170 corresponding to the first limiting block 174 in the X-axis direction are deformed, and a deformation direction of the first limiting block 174 and the first mounting part 170 corresponding to the first limiting block 174 is a direction in which the first limiting block 174 points to the second avoidance clearance 177. In other words, the second avoidance clearance 177 may enable the first limiting block 174 and the first mounting part 170 to have deformation spaces, so that the first limiting block 174 and a part that is of the first limiting block 174 and that corresponds to the first mounting part 170 are successfully assembled in the first fitting groove 154.

Similarly, the second limiting block 175 and a part of the first mounting part 170 corresponding to the second limiting block 175 in the X-axis direction are deformed, and a deformation direction of the second limiting block 175 and the first mounting part 170 corresponding to the second limiting block 175 is a direction in which the second limiting block 175 points to the first avoidance clearance 176. In other words, the first avoidance clearance 176 may enable the second limiting block 175 and the first mounting part 170 to have deformation spaces, so that the second limiting block and a part that is of the second limiting block and that corresponds to the first mounting part 170 are successfully assembled in the first fitting groove 154.

It can be learned from the above that machining precision of the first decorative member 120 is not high. For example, the width sizes of the first limiting block 174, the second limiting block 175, and the first mounting part 170 in the X-axis direction are slightly greater than the width size of the first fitting groove 154 in the X-axis direction. The first avoidance clearance 176 and the second avoidance clearance 177 provide the first decorative member 120 with deformation spaces, to ensure that the first limiting block 174 and the second limiting block 175 successfully extend into the first fitting groove 154. Therefore, a requirement for machining precision of the first decorative member 120 is reduced, thereby reducing difficulty of assembling the first mounting part 170 in the first fitting groove 154, increasing a manufacturing yield, and reducing costs.

In addition, after the first limiting block 174 and the second limiting block 175 extend into the first fitting groove 154, the first limiting block 174 abuts against the first groove side surface 155, and the second limiting block 175 abuts against the second groove side surface 156. Therefore, stability and precision of fastening the first mounting part 170 to the first fitting groove 154 are improved, that is, the first decorative member 120 may be precisely limited, thereby improving precision of fitting between the first decorative member 120 and the first frame body 150. Therefore, the appearance of the electronic device is flatter, and aesthetic is improved.

In this embodiment, the first limiting block 174 and the second limiting block 175 are completely staggered in the length direction of the first decorative member 120 (the first limiting block 174 and the second limiting block 175 are completely not overlapped in the X-axis direction), that is, the projections of the first limiting block 174 and the second limiting block 175 on the first mounting side surface 172 are completely staggered. In this case, the first limiting block 174, the second limiting block 175, and the first mounting part 170 have larger deformation spaces.

In another embodiment, the first limiting block 174 and the second limiting block 175 may alternatively be disposed to be partially staggered in the length direction of the first decorative member 120 (the first limiting block 174 and the second limiting block 175 are partially not overlapped in the X-axis direction), that is, the projections of the first limiting block 174 and the second limiting block 175 on the first mounting side surface 172 are partially staggered.

Still refer to FIG. 19. At least a part of the second decorative surface 162 of the first decorative part 160 faces the first fitting surface 151 of the first frame body 150, and the second decorative surface 162 is in surface-to-surface contact with the first fitting surface 151. The other part of the second decorative surface 162 of the first decorative part 160 and the first connection groove 167 face the display 300. The display 300 and the first decorative part 160 are connected by using the second bonding layer 131 and the first filling layer 132. Specifically, the second bonding layer 131 and the first filling layer 132 are located in the first connection groove 167, and the second bonding layer 131 and the first filling layer 132 are stacked in the Z-axis direction. A top surface of the second bonding layer 131 is bonded to a groove bottom surface of the first connection groove 167, a bottom surface of the second bonding layer 131 is bonded to a top surface of the first filling layer 132, and a bottom surface of the first filling layer 132 is in contact with an edge region of the display surface of the first display region 310 of the display 300. The second bonding layer 131 enables the first filling layer 132 to be reliably connected to the first decorative part 160, and the first filling layer 132 can seal a slit between the first decorative part 160 and the display 300, to prevent foreign matters such as dust and water from entering the accommodating cavity.

The first decorative side surface 163 of the first decorative part 160 is located on a same side as the first inner side surface 152 of the first frame body 150, the second decorative side surface 164 of the first decorative part 160 is located on a same side as the first outer side surface 153 of the first frame body 150, and the second decorative side surface 164 is smoothly butt-jointed with the first outer side surface 153, so that the appearance of the electronic device 1000 is flatter and smoother.

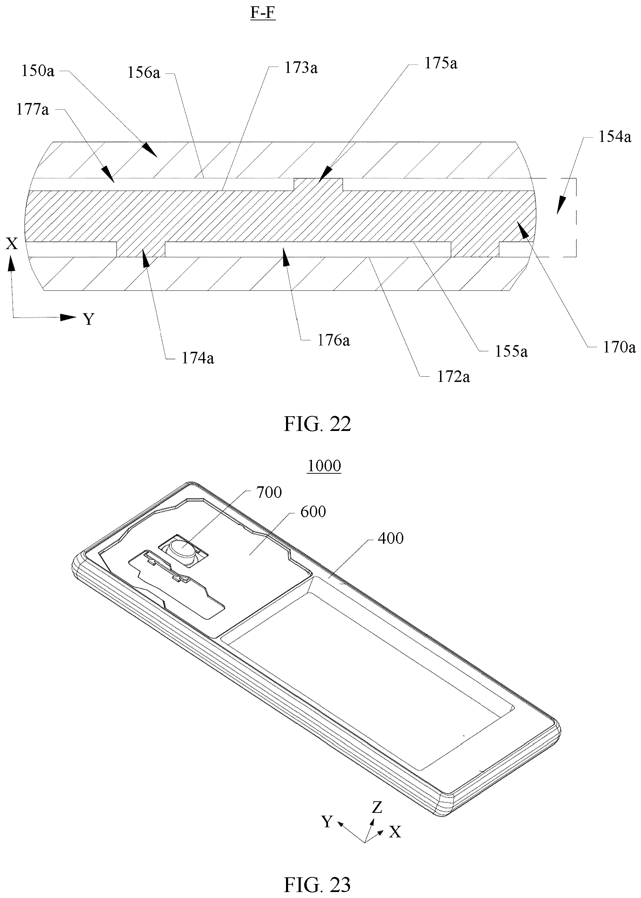

Refer to FIG. 21 and FIG. 22. FIG. 21 is an enlarged view of a part D in FIG. 18, and FIG. 22 is a schematic diagram of a cross-sectional structure of FIG. 21 in a direction F-F.

The second display region 320 of the display 300 is fixed on the third surface 141a of the second bearing plate 140a by using the third bonding layer 130a. Specifically, the third bonding layer 130a is bonded between a mounting surface of the second display region 320 and the third surface 141a.

The second decorative member 120a is mounted on the second frame body 150a, and is fixedly connected to the display 300. Specifically, the second mounting bottom surface 171a faces the second groove bottom surface 157a. The second mounting part 170a is located in the second fitting groove 154a, the third mounting side surface 172a and the first limiting block 174a face the third groove side surface 155a, and a fit clearance between the first limiting block 174a and the third groove side surface 155a is between 0 millimeters and 0.03 millimeter. The fourth mounting side surface 173a and the second limiting block 175a face the fourth groove side surface 156a, and a fit clearance between the second limiting block 175a and the fourth groove side surface 156a is between 0 millimeters and 0.03 millimeter.

The first limiting block 174a and the second limiting block 175a are staggered in a length direction of the second decorative member 120a (the first limiting block 174a and the second limiting block 175a are not overlapped in the X-axis direction), that is, projections of the first limiting block 174a and the second limiting block 175a on the third mounting side surface 172a are staggered with each other. Therefore, a gap that is between the third mounting side surface 172a and the third groove side surface 155a and that corresponds to the second limiting block 175a forms a third avoidance clearance 176a. In other words, a gap between two adjacent first limiting blocks 174a is the third avoidance clearance 176a. A gap that is between the fourth mounting side surface 173a and the fourth groove side surface 156a and that corresponds to the first limiting block 174a forms a fourth avoidance clearance 177a. In other words, a gap between two adjacent second limiting blocks 175a is the fourth avoidance clearance 177a.

When the second mounting part 170a of the second decorative member 120a is assembled in the second fitting groove 154a, if width sizes of the first limiting block 174a, the second limiting block 175a, and the second mounting part 170a in the X-axis direction are slightly greater than a width size of the second fitting groove 154a in the X-axis direction due to reasons such as a machining error (for example, sizes of one or more first limiting blocks 174a are slightly wider in the X-axis direction, sizes of one or more second limiting blocks 175a are slightly wider in the X-axis direction, or a size of the second mounting part 170a is slightly wider in the X-axis direction). The first limiting block 174a and a part of the second mounting part 170a corresponding to the first limiting block 174a in the X-axis direction are deformed, and a deformation direction of the first limiting block 174a and the second mounting part 170a corresponding to the first limiting block 174a is a direction in which the first limiting block 174a points to the fourth avoidance clearance 177a. In other words, the fourth avoidance clearance 177a enables the first limiting block 174a and the second mounting part 170a to have deformation spaces, so that the first limiting block 174a and a part that is of the first limiting block 174a and that corresponds to the second mounting part 170a are successfully assembled in the second fitting groove 154a.

Similarly, the second limiting block 175a and a part of the second mounting part 170a corresponding to the second limiting block 175a in the X-axis direction are deformed, and a deformation direction of the second limiting block 175a and the second mounting part 170a corresponding to the second limiting block 175a is a direction in which the second limiting block 175a points to the third avoidance clearance 176a. In other words, the third avoidance clearance 176a may enable the second limiting block 175a and the second mounting part 170a to have deformation spaces, so that the second limiting block 175a and a part that is of the second limiting block 175a and that corresponds to the second mounting part 170a are successfully assembled in the second fitting groove 154a.

It can be learned from the above that machining precision of the second decorative member 120a is not high. For example, the width sizes of the first limiting block 174a, the second limiting block 175a, and the second mounting part 170a in the X-axis direction are slightly greater than the width size of the second fitting groove 154a in the X-axis direction. The third avoidance clearance 176a and the fourth avoidance clearance 177a provide the second decorative member 120a with deformation spaces, to ensure that the first limiting block 174a and the second limiting block 175a successfully extend into the second fitting groove 154a. Therefore, a structure of this embodiment has a reduced requirement for machining precision of the second decorative member 120a, thereby reducing difficulty of assembling the second mounting part 170a in the second fitting groove 154a, increasing a manufacturing yield, and reducing costs.

In addition, after the first limiting block 174a and the second limiting block 175a extend into the second fitting groove 154a, the first limiting block 174a abuts against the third groove side surface 155a, and the second limiting block 175a abuts against the fourth groove side surface 156a. Therefore, stability and precision of fastening the second mounting part 170a to the second fitting groove 154a are improved, that is, the second decorative member 120a may be precisely limited, thereby improving precision of fitting between the second decorative member 120a and the second frame body 150a. Therefore, the appearance of the electronic device is flatter, and aesthetic is improved.

In this embodiment, the first limiting block 174a and the second limiting block 175a are completely staggered in the length direction of the second decorative member 120a (the first limiting block 174a and the second limiting block 175a are completely not overlapped in the X-axis direction), that is, the projections of the first limiting block 174a and the second limiting block 175a on the third mounting side surface 172a are completely staggered. In this case, the first limiting block 174a, the second limiting block 175a, and the second mounting part 170a have larger deformation spaces.

In another embodiment, the first limiting block 174a and the second limiting block 175a are partially staggered in the length direction of the second decorative member 120a (the first limiting block 174a and the second limiting block 175a are partially not overlapped in the X-axis direction), that is, the projections of the first limiting block 174a and the second limiting block 175a on the third mounting side surface 172a are partially staggered.

At least a part of the fourth decorative surface 162a of the second decorative part 160a faces the second fitting surface 151a of the second frame body 150a, and the fourth decorative surface 162a is in surface-to-surface contact with the second fitting surface 151a. The other part of the fourth decorative surface 162a of the second decorative part 160a and the second connection groove 167a face the display. The display and the second decorative part 160a are connected by using the fourth bonding layer 131a and the second filling layer 132a. Specifically, the fourth bonding layer 131a and the second filling layer 132a are located in the second connection groove 167a, and the fourth bonding layer 131a and the second filling layer 132a are stacked in the Z-axis direction. A top surface of the fourth bonding layer 131a is bonded to a groove bottom surface of the second connection groove 167a, a bottom surface of the fourth bonding layer 131a is bonded to a top surface of the second filling layer 132a, and a bottom surface of the second filling layer 132a is in contact with an edge region of the display surface of the second display region of the display. The fourth bonding layer 131a enables the second filling layer 132a to be reliably connected to the second decorative part 160a, and the second filling layer 132a can seal a slit between the second decorative part 160a and the display, to prevent foreign matters such as dust and water from entering the accommodating cavity.

The third decorative side surface 163a of the second decorative part 160a is located on a same side as the second inner side surface 152a of the second frame body 150a, the fourth decorative side surface 164a of the second decorative part 160a is located on a same side as the second outer side surface 153a of the second frame body 150a, and the fourth decorative side surface 164a is smoothly butt-jointed with the second outer side surface 153a, so that the appearance of the electronic device is flatter and smoother.

In this embodiment, the first middle frame 110 is the first structural member, and correspondingly, the first decorative member 120 is the second structural member; the first fitting groove 154 is the mounting groove, the first groove side surface 155 is the first groove surface, and the second groove side surface 156 is the second groove surface; and the first mounting side surface 172 of the first mounting part 170 of the first decorative member 120 is the first side, and the second mounting side surface 173 of the first mounting part 170 is the second side. The second middle frame 110a is the first structural member, and correspondingly, the second decorative member 120a is the second structural member; the second fitting groove 154a is the mounting groove, the third groove side surface 155a is the first groove surface, and the fourth groove side surface 156a is the second groove surface; and the third mounting side surface 172a of the second mounting part 170a of the second decorative member 120a is the first side, and the fourth mounting side surface 173a of the second mounting part 170a is the second side.

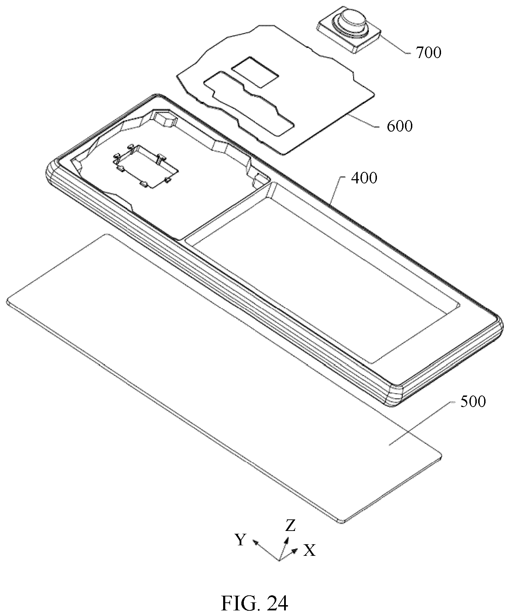

Refer to FIG. 23 and FIG. 24. FIG. 23 is a schematic diagram of a structure of an electronic device according to another embodiment of this application, and FIG. 24 is a schematic diagram of an exploded structure of the electronic device shown in FIG. 23.

In another embodiment of this application, an example in which the electronic device 1000 is a bar phone is used for description. The bar phone is a cellphone without a folding function. For ease of description, a width direction of the electronic device 1000 is defined as an X-axis direction, a length direction of the electronic device 1000 is defined as a Y-axis direction, and a thickness direction of the electronic device 1000 is defined as a Z-axis direction. Every two of the X-axis direction, the Y-axis direction, and the Z-axis direction are perpendicular to each other.

The electronic device 1000 includes a middle frame 400, a back cover (not shown in the figure), a display 500, a support plate 600, and a camera module 700.

The display 500 may be any one of an organic light-emitting diode (organic light-emitting diode, OLED) display 500, an passive-matrix organic light-emitting diode or an active-matrix organic light-emitting diode (active-matrix organic light-emitting diode, AMOLED) display 500, or the like.

The display 500 is fixed on one side of the middle frame 400, and the back cover is fixed on one side that is of the middle frame 400 and that faces away from the display 500. The display 500 and the back cover enclose a first cavity and a second cavity, the first cavity is configured to mount a battery, and the second cavity is configured to mount a main circuit board. The support plate 600 is fastened in the first cavity, to support the main circuit board. The camera module 700 is mounted in the first cavity, and a lens 720 of the camera module 700 is exposed relative to the back cover for ease of shooting or video recording by a user.

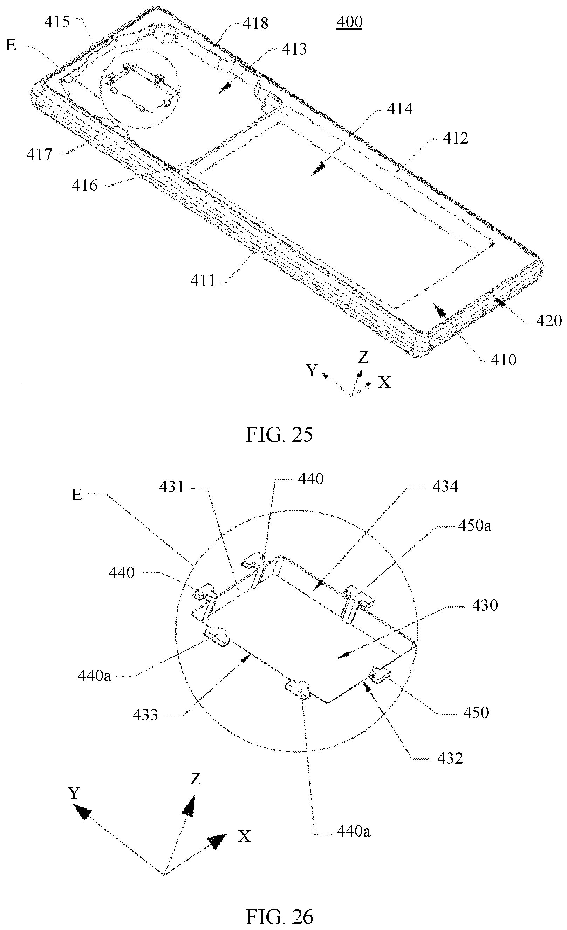

Refer to FIG. 25. FIG. 25 is a schematic diagram of a structure of the middle frame in the electronic device shown in FIG. 24.

The middle frame 400 is rectangular. The middle frame 400 includes a bearing plate 410 and a frame body 420. The bearing plate 410 is a rectangular thin plate. The bearing plate 410 includes a first bearing surface 411 and a second bearing surface 412 that face away from each other in the Z-axis direction. The first bearing surface 411 is configured to support the display 500. A first mounting cavity 413 and a second mounting cavity 414 are disposed on the bearing plate 410, and the first mounting cavity 413 and the second mounting cavity 414 are arranged in the Y-axis direction. The first mounting cavity 413 and the second mounting cavity 414 are formed through recession of the second bearing surface 412 in a direction toward the first bearing surface 411. The first mounting cavity 413 is configured to form the first cavity, and the second mounting cavity 414 is configured to form the second cavity. The frame body 420 is a rectangular frame, and the frame body 420 is disposed around the bearing plate, and is fixedly connected to a periphery of the bearing plate.

The first mounting cavity 413 is roughly rectangular, and the first mounting cavity 413 includes a cavity bottom surface, a first cavity surface 415 and a second cavity surface 416 that are disposed opposite to each other, and a third cavity surface 417 and a fourth cavity surface 418 that are disposed opposite to each other. The first cavity surface 415, the second cavity surface 416, the third cavity surface 417, and the fourth cavity surface 418 surround the cavity bottom surface and are connected to the cavity bottom surface. The first cavity surface 415 and the second cavity surface 416 are substantially parallel to a plane formed by an X axis and a Z axis, and the third cavity surface 417 and the fourth cavity surface 418 are substantially parallel to a plane formed by a Y axis and the Z axis. The second mounting cavity 414 is rectangular. In another embodiment, the first cavity surface 415 and the second cavity surface 416 may alternatively be inclined at a specific angle, and the third cavity surface 417 and the fourth cavity surface 418 may alternatively be inclined at a specific angle, so that the first mounting cavity 413 is large at the top and small at the bottom, thereby facilitating mounting of the support plate.

Refer to FIG. 26. FIG. 26 is an enlarged view of a part E in FIG. 25.

In this embodiment, an accommodating groove 430 is concavely disposed on the cavity bottom surface of the first mounting cavity 413, and the accommodating groove 430 is configured to mount the camera module 700. The accommodating groove 430 is rectangular, and the accommodating groove 430 has a first groove wall surface 431 and a second groove wall surface 432 that are disposed opposite to each other, and a third groove wall surface 433 and a fourth groove wall surface 434 that are disposed opposite to each other. The first groove wall surface 431 and the second groove wall surface 432 are substantially parallel to the plane formed by the X axis and the Z axis, and the third groove wall surface 433 and the fourth groove wall surface 434 are substantially parallel to the plane formed by the Y axis and the Z axis. A first limiting block 440 is convexly disposed on the first groove wall surface 431, and a second limiting block 450 is convexly disposed on the second groove wall surface 432. A first limiting block 440a is convexly disposed on the third groove wall surface 433, and a second limiting block 450a is convexly disposed on the fourth groove wall surface 434. The first limiting blocks 440 and 440a and the second limiting blocks 450 and 450a have elastic deformation performance. The first limiting block 440, the second limiting block 450, the first limiting block 440a, and the second limiting block 450a protrude from the cavity bottom surface of the first mounting cavity 413 in a depth direction of the groove. The first limiting block 440 on the first groove wall surface 431 and the second limiting block 450 on the second groove wall surface 432 are staggered in the X-axis direction. The first limiting block 440a on the third groove wall surface 433 and the second limiting block 450a on the fourth groove wall surface 434 are staggered in the Y-axis direction. The first limiting block 440 and the second limiting block 450 may be formed integrally with the bearing plate, or may be formed separately. Specifically, there are two spaced first limiting blocks 440 and one second limiting block 450, and the second limiting block 450 is located between the two first limiting blocks 440 in a length direction of the middle frame 400.

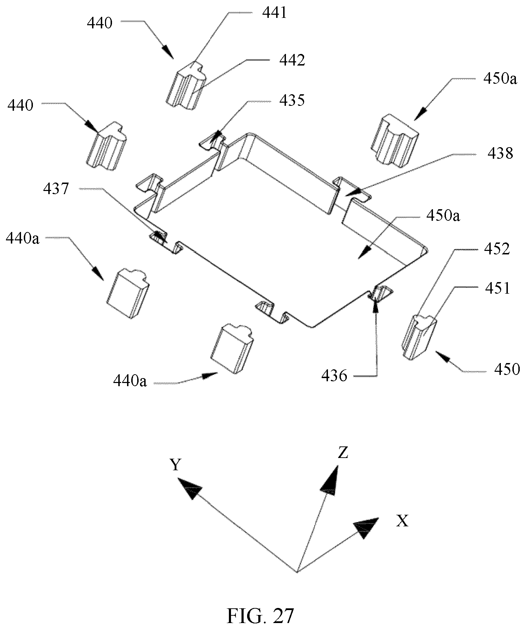

Refer to FIG. 27. FIG. 27 is a schematic diagram of an exploded structure of FIG. 26.

In this embodiment, the first limiting block 440 and the second limiting block 450 are separately formed and then mounted in the accommodating groove 430. Specifically, a first limiting groove 435 is concavely disposed on the first groove wall surface 431. The first limiting block 440 includes a first fixed part 441 and a first limiting part 442. The first fixed part 441 is fixedly clamped in the first limiting groove 435, and the first limiting part 442 extends out of the first limiting groove 435 and is convex relative to the first groove wall surface 431 to fit with the camera module 700. A second limiting groove 436 is disposed on the second groove wall surface 432. A structure of the second limiting block 450 is the same as a structure of the first limiting block 440. The second limiting block 450 includes a second fixed part 451 and a second limiting part 452. The second fixed part 451 is fixedly clamped in the second limiting groove 436, and the second limiting part 452 extends out of the second limiting groove 436 to fit with the camera module 700. Similarly, a third limiting groove 437 is disposed on the third groove wall surface 433, and a fourth limiting groove 438 is disposed on the fourth groove wall surface 434. A structure of the first limiting block 440a is the same as the structure of the first limiting block 440, and a structure of the second limiting block 450a is the same as the structure of the second limiting block 450. In this embodiment, cross sections of the first limiting block 440 and the second limiting block 450 are convex-shaped.

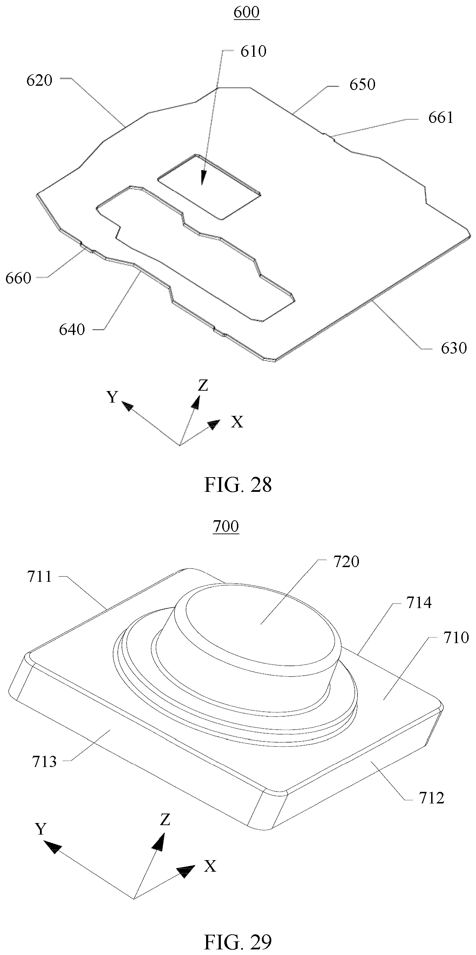

Refer to FIG. 28. FIG. 28 is a schematic diagram of a structure of the support plate of the electronic device shown in FIG. 24.

The support plate 600 is roughly rectangular. An avoidance groove 610 is disposed on the support plate 600, and the avoidance groove 610 penetrates through the support plate 600 in the Z-axis direction. The avoidance groove 610 is configured to avoid the camera module 700. The support plate 600 includes a first end surface 620 and a second end surface 630 that face away from each other, and a third end surface 640 and a fourth end surface 650 that face away from each other. The first end surface 620, the second end surface 630, the third end surface 640, and the fourth end surface 650 are peripheral side surfaces of the support plate 600. The first end surface 620 and the second end surface 630 are parallel to the plane formed by the X axis and the Z axis, and the third end surface 640 and the fourth end surface 650 are parallel to the plane formed by the Y axis and the Z axis. A first limiting block 660 is convexly disposed on the third end surface 640, a second limiting block 661 is convexly disposed on the fourth end surface 650, and the first limiting block 660 on the third end surface 640 and the second limiting block 661 on the fourth end surface 650 are staggered in the Y-axis direction. The support plate 600, the first limiting block 660, and the second limiting block 661 are made of a material with elastic deformation performance, for example, plastic. In another embodiment, the first limiting block 660 is convexly disposed on the first end surface 620, and the second limiting block 661 is convexly disposed on the second end surface 630. The first limiting block 660 on the first end surface 620 and the second limiting block 661 on the second end surface 630 are staggered in the X-axis direction.

Refer to FIG. 29. FIG. 29 is a schematic diagram of a structure of the camera module of the electronic device shown in FIG. 24.

The camera module 700 includes a camera bracket 710 and a lens 720, where the lens 720 is circular, and the lens 720 is fixed on the camera bracket 710. The camera bracket 710 is a square block, and the camera bracket 710 includes a first peripheral surface 711 and a second peripheral surface 712 that are disposed opposite to each other, and a third peripheral surface 713 and a fourth peripheral surface 714 that are disposed opposite to each other. The first peripheral surface 711 and the second peripheral surface 712 are parallel to the plane formed by the X axis and the Z axis. The third peripheral surface 713 and the fourth peripheral surface 714 are parallel to the plane formed by the Y axis and the Z axis. The camera bracket 710 has elastic deformation performance.

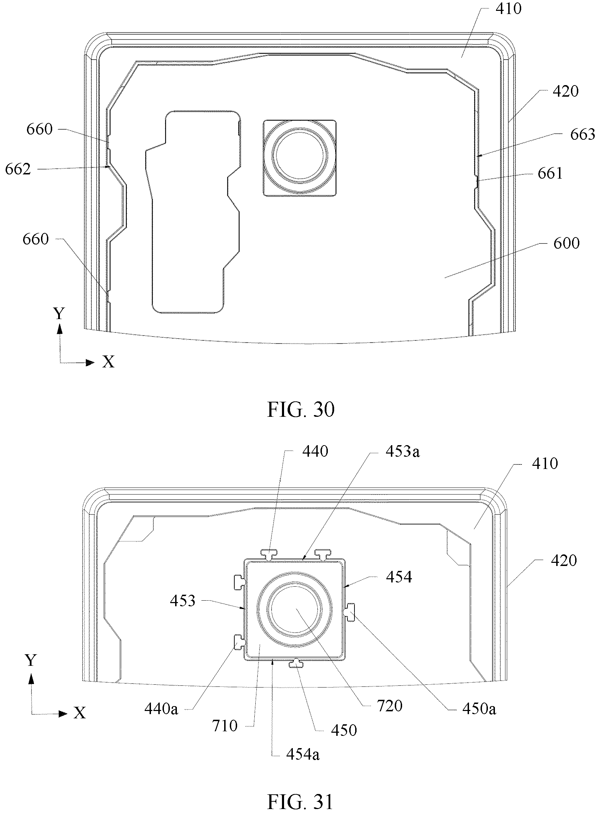

Refer to FIG. 30. FIG. 30 is a schematic diagram of a local structure of the electronic device shown in FIG. 23.

In this embodiment, the support plate 600 is mounted in the first mounting cavity 413, the first limiting block 660 faces the third cavity surface 417, and a fit clearance between the first limiting block 660 and the third cavity surface 417 is between 0 millimeters and 0.03 millimeter. The second limiting block 661 faces the fourth cavity surface 418, and a fit clearance between the second limiting block 661 and the fourth cavity surface 418 is between 0 millimeters and 0.03 millimeter.

The first limiting block 660 and the second limiting block 661 are staggered (the first limiting block 660 and the second limiting block 661 are not overlapped in the X-axis direction), that is, projections of the first limiting block 660 and the second limiting block 661 on the third end surface 640 are staggered with each other. Therefore, a gap that is between the third cavity surface 417 and the third end surface 640 and that corresponds to the second limiting block 661 forms a first avoidance clearance 662. In other words, a gap between two adjacent first limiting blocks 660 forms the first avoidance clearance 662. A gap that is between the fourth cavity surface 418 and the fourth end surface 650 and that corresponds to the first limiting block 660 forms a second avoidance clearance 663. In other words, gaps on two sides of the second limiting block 661 are second avoidance clearances 663.

When the support plate 600 is mounted in the first mounting cavity 413, if a sum of widths of the first limiting block 660, the second limiting block 661, and the support plate 600 in the X-axis direction is slightly greater than a width size of the first mounting cavity 413 in the X-axis direction due to reasons such as a machining error (for example, a size of the first limiting block 660 in the X-axis direction is slightly wider, a size of the second limiting block 661 in the X-axis direction is slightly wider, or a size of the support plate 600 in the X-axis direction is slightly wider). The first limiting block 660 and a part of the support plate 600 corresponding to the first limiting block 660 in the X-axis direction are deformed, and a deformation direction of the first limiting block 660 and the support plate 600 corresponding to the first limiting block 660 is a direction in which the first limiting block 660 points to the second avoidance clearance 663. In other words, the second avoidance clearance 663 enables the first limiting block 660 and the support plate 600 to have deformation spaces, so that the first limiting block 660 and a part that is of the first limiting block 660 and that corresponds to the support plate 600 are successfully assembled in the first mounting cavity 413.

Similarly, the second limiting block 661 and a part of the support plate 600 corresponding to the second limiting block 661 in the X-axis direction are deformed, and a deformation direction of the second limiting block 661 and the support plate 600 corresponding to the second limiting block 661 is a direction in which the second limiting block 661 points to the first avoidance clearance 662. In other words, the first avoidance clearance 662 enables the second limiting block 661 and the support plate 600 to have deformation spaces, so that the second limiting block 661 and a part that is of the second limiting block 661 and that corresponds to the support plate 600 are successfully assembled in the first mounting cavity 413.

It can be learned from the above that machining precision of the support plate 600 is not high. For example, width sizes of the first limiting block 660, the second limiting block 661, and the support plate 600 in the X-axis direction are slightly greater than the width size of the first mounting cavity 413 in the X-axis direction. The first avoidance clearance 662 and the second avoidance clearance 663 provide the support plate 600 with deformation spaces, to ensure that the first limiting block 660 and the second limiting block 661 successfully extend into the first mounting cavity 413. Therefore, a requirement for machining precision of the support plate 600 is reduced, thereby reducing difficulty of assembling the support plate 600 in the first mounting cavity 413, increasing a manufacturing yield, and reducing costs. In addition, stability and precision of fastening the support plate 600 to the first mounting cavity 413 are improved, that is, the support plate 600 may be precisely limited.

In this embodiment, the first limiting block 660 and the second limiting block 661 are completely staggered in the Y-axis direction (the first limiting block 660 and the second limiting block 661 are completely not overlapped in the X-axis direction), that is, the projections of the first limiting block 660 and the second limiting block 661 on the third end surface 640 are completely staggered. In this case, the first limiting block 660, the second limiting block 661, and the support plate 600 have larger deformation spaces.

In another embodiment, the first limiting block 660 and the second limiting block 661 are partially staggered in the Y-axis direction (the first limiting block 660 and the second limiting block 661 are partially not overlapped in the X-axis direction), that is, the projections of the first limiting block 660 and the second limiting block 661 on the third end surface 640 are partially staggered.

In another embodiment, the first limiting block 660 may be convexly disposed on the first cavity surface 415, and the second limiting block 661 may be convexly disposed on the second cavity surface 416. Projections of the first limiting block 660 and the second limiting block 661 on the first end surface 620 are staggered with each other. A limiting principle for the first limiting block 660 and the second limiting block 661 is the same as that described above. Details are not described again. The first limiting block 660 and the second limiting block 661 on the first end surface 620 may be completely or partially staggered. When complete staggering occurs, the first limiting block 660, the second limiting block 661, and the support plate 600 have larger deformation spaces.

Refer to FIG. 31. FIG. 31 is a schematic diagram of another local structure of the electronic device shown in FIG. 23.

The camera module 700 is mounted in the accommodating groove 430, and the lens 720 passes through the avoidance groove 610 of the support plate 600, to extend out of the back cover. The first peripheral surface 711 of the camera module 700 abuts against the first limiting block 440 on the first groove wall surface 431, and the second peripheral surface 712 abuts against the second limiting block 450 on the second groove wall surface 432. The third peripheral surface 713 abuts against the first limiting block 440a on the third groove wall surface 433, and the fourth peripheral surface 714 abuts against the second limiting block 450a on the fourth groove wall surface 434.

The first limiting block 440 and the second limiting block 450 are staggered in the X-axis direction (that is, the first limiting block 440 and the second limiting block 450 are not overlapped in the Y-axis direction), that is, projections of the first limiting block 440 and the second limiting block 450 on the first peripheral surface 711 are staggered with each other. Therefore, a gap that is between the first peripheral surface 711 and the first groove wall surface 431 and that corresponds to the second limiting block 450 forms a first avoidance clearance 453. In other words, a gap between two adjacent first limiting blocks 440 is the first avoidance clearance 453. A gap that is between the second peripheral surface 712 and the second groove wall surface 432 and that corresponds to the first limiting block 440 forms a second avoidance clearance 454. In other words, gaps on two sides of the second limiting block 450 are second avoidance clearances 454.

Similarly, the first limiting block 440a and the second limiting block 450a are staggered in the Y-axis direction (that is, the first limiting block 440 and the second limiting block 450 are not overlapped in the X-axis direction), that is, projections of the first limiting block 440a and the second limiting block 450a on the third peripheral surface 713 are staggered with each other. Therefore, a gap that is between the third peripheral surface 713 and the third groove wall surface 433 and that corresponds to the second limiting block 450a forms a first avoidance clearance 453a. In other words, a gap between two adjacent first limiting blocks 440a is the first avoidance clearance 453a. A gap that is between the fourth peripheral surface 714 and the fourth groove wall surface 434 and that corresponds to the first limiting block 440a forms a second avoidance clearance 454a. In other words, gaps on two sides of the second limiting block 450a are second avoidance clearances 454a.

When the camera bracket 710 is mounted in the accommodating groove 430, if sizes of the first limiting block 440, the second limiting block 450, and the camera bracket 710 in the Y-axis direction are slightly greater than a size of the accommodating groove 430 in the Y-axis direction due to reasons such as a machining error. The first limiting block 440 and a part of the camera bracket 710 corresponding to the first limiting block 440 in the Y-axis direction are deformed, and a deformation direction of the first limiting block 440 and the camera bracket 710 corresponding to the first limiting block 440 is a direction in which the first limiting block 440 points to the second avoidance clearance 454. In other words, the second avoidance clearance 454 enables the first limiting block 440 and the camera bracket 710 to have deformation spaces, so that the first limiting block 440 and the part of the camera bracket 710 corresponding to the first limiting block 440 are successfully assembled in the accommodating groove 430.

The second limiting block 450 and a part of the camera bracket 710 corresponding to the second limiting block 450 in the Y-axis direction are deformed, and a deformation direction of the second limiting block 450 and the camera bracket 710 corresponding to the second limiting block 450 is a direction in which the second limiting block 450 points to the first avoidance clearance 453. In other words, the first avoidance clearance 453 enables the second limiting block 450 and the camera bracket 710 to have deformation spaces, so that the second limiting block 450 and the part of the camera bracket 710 corresponding to the second limiting block 450 are successfully assembled in the accommodating groove 430.

When the camera bracket 710 is mounted in the accommodating groove 430, if sizes of the first limiting block 440a, the second limiting block 450a, and the camera bracket 710 in the X-axis direction are slightly greater than a size of the accommodating groove 430 in the X-axis direction due to reasons such as a machining error. The first limiting block 440a and a part of the camera bracket 710 corresponding to the first limiting block 440a in the X-axis direction are deformed, and a deformation direction of the first limiting block 440a and the camera bracket 710 corresponding to the first limiting block 440a is a direction in which the first limiting block 440a points to the second avoidance clearance 454a. In other words, the second avoidance clearance 454a enables the first limiting block 440a and the camera bracket 710 to have deformation spaces, so that the first limiting block 440a and the part of the camera bracket 710 corresponding to the first limiting block 440a are successfully assembled in the accommodating groove 430.

The second limiting block 450a and a part of the camera bracket 710 corresponding to the second limiting block 450a in the X-axis direction are deformed, and a deformation direction of the second limiting block 450a and the camera bracket 710 corresponding to the second limiting block 450a is a direction in which the second limiting block 450a points to the first avoidance clearance 453a. In other words, the first avoidance clearance 453a enables the second limiting block 450a and the camera bracket 710 to have deformation spaces, so that the second limiting block 450a and the part of the camera bracket 710 corresponding to the second limiting block 450a are successfully assembled in the accommodating groove 430.

It can be learned from the above that machining precision of one or more of the camera bracket 710, the first limiting blocks 440 and 440a, and the second limiting blocks 450 and 450a is not high. The first avoidance clearances 453 and 453a and the second avoidance clearances 454 and 454a provide deformation spaces, to ensure that the camera bracket 710 is successfully mounted in the accommodating groove 430. Therefore, a requirement for machining precision of the camera bracket 710, the first limiting blocks 440 and 440a, and the second limiting blocks 450 and 450a are reduced, thereby reducing difficulty of mounting the camera bracket 710 in the accommodating groove 430, increasing a manufacturing yield, and reducing costs. In addition, stability and precision of fastening the camera bracket 710 to the accommodating groove 430 are improved, that is, the camera bracket 710 may be precisely limited.

In this embodiment, the first limiting block 440 and the second limiting block 450 are completely staggered in the X-axis direction (that is, the first limiting block 440 and the second limiting block 450 are completely not overlapped in the Y-axis direction), that is, the projections of the first limiting block 440 and the second limiting block 450 on the first peripheral surface 711 are completely staggered. The first limiting block 440a and the second limiting block 450a are completely staggered in the Y-axis direction (that is, the first limiting block 440 and the second limiting block 450 are completely not overlapped in the X-axis direction), that is, the projections of the first limiting block 440a and the second limiting block 450a on the third peripheral surface 713 are completely staggered. In this case, the camera bracket 710, the first limiting blocks 440 and 440a, and the second limiting blocks 450 and 450a have larger deformation spaces.

In another embodiment, the first limiting block 440 and the second limiting block 450 are partially staggered in the X-axis direction (that is, the first limiting block 440 and the second limiting block 450 are partially not overlapped in the Y-axis direction), that is, the projections of the first limiting block 440 and the second limiting block 450 on the first peripheral surface 711 are partially staggered. The first limiting block 440a and the second limiting block 450a are partially staggered in the Y-axis direction (that is, the first limiting block 440 and the second limiting block 450 are partially not overlapped in the X-axis direction), that is, the projections of the first limiting block 440a and the second limiting block 450a on the third peripheral surface 713 are partially staggered.

In another embodiment, the first limiting block may be convexly disposed on each of the first peripheral surface 711 and the third peripheral surface 713 of the camera bracket 710, and the second limiting block may be convexly disposed on each of the second peripheral surface 712 and the fourth peripheral surface 714 of the camera bracket 710. A limiting principle is the same as that described above. Details are not described again.

In this embodiment, the middle frame 400 is a first structural member, and correspondingly, the support plate 600 is a second structural member. The first mounting cavity 413 is a mounting groove, the first cavity surface 415 is a first groove surface, and the second cavity surface 416 is a second groove surface. The first end surface 620 of the support plate 600 is a first side, and the second end surface 630 of the support plate 600 is a second side.

In addition, the middle frame 400 is a first structural member, and correspondingly, the camera module 700 may alternatively be a second structural member. The accommodating groove 430 is a mounting groove. The first groove wall surface 431 of the accommodating groove 430 is a first groove surface, and the second groove wall surface 432 is a second groove surface. Correspondingly, the first peripheral surface 711 of the camera bracket 710 is a first side, and the second peripheral surface 712 is a second side.

The third groove wall surface 433 of the accommodating groove 430 is a first groove surface, and the fourth groove wall surface 434 is a second groove surface. Correspondingly, the third peripheral surface 713 of the camera bracket 710 is a first side, and the fourth peripheral surface 714 is a second side.

In this embodiment, the electronic device 1000 is a bar phone. The bar phone further includes a decorative member. The decorative member is fixedly connected to the middle frame. A difference between the decorative member and the first decorative member 120 in the foregoing foldable cellphone lies in that the decorative member in this embodiment is a closed rectangle but the first decorative member 120 is in the shape of "⊐".

Specifically, a fitting groove is disposed on the frame body 420, the fitting groove extends around a thickness direction of the middle frame, and the fitting groove is rectangular. The fitting groove has a first groove side surface and a second groove side surface that are disposed opposite to each other. The decorative member extends around the Z-axis direction and includes a decorative part and a mounting part that are fixedly connected, and the mounting part includes a first mounting side surface and a second mounting side surface that face away from each other. In this embodiment, the frame body is a first structural member, and the decorative member is a second structural member. The fitting groove is a mounting groove, the first groove side surface is a first groove surface, the second groove side surface is a second groove surface, the first mounting side surface is a first side, and the second mounting side surface is a second side.

The mounting part is mounted in the fitting groove, the first mounting side surface faces the first groove side surface, the second mounting side surface faces the second groove side surface, the first limiting block is disposed between the first mounting side surface and the first groove side surface, and the second limiting block is disposed between the second mounting side surface and the second groove side surface. Projections of the first limiting block and the second limiting block on the first mounting side surface are staggered with each other. A gap that is between the first groove side surface and the first mounting side surface and that corresponds to the second limiting block forms a first avoidance clearance, and a gap that is between the second groove side surface and the second mounting side surface and that corresponds to the first limiting block forms a second avoidance clearance. The mounting part, the first limiting block, and the second limiting block all have elastic deformation performance, and the first avoidance clearance and the second avoidance clearance provide the mounting part, the first limiting block, and the second limiting block with deformation spaces.

A manner of disposing the first limiting block and the second limiting block is the same as that for the foldable cellphone in the foregoing embodiment. That is, in a specific implementation, the first limiting block is convexly disposed on the first groove side surface, and the second limiting block is convexly disposed on the second groove side surface. In another specific implementation, the first limiting block is convexly disposed on the first mounting side surface, and the second limiting block is convexly disposed on the second mounting side surface. In still another specific implementation, the first limiting block is convexly disposed on each of the first groove side surface and the first mounting side surface, and the second limiting block is convexly disposed on each of the second groove side surface and the second mounting side surface.

In this embodiment, the display is stacked on the bearing plate, and is bonded and fixed on the bearing plate by using a bonding layer. A bonding layer and a filling layer may also be disposed between the decorative part and the display, so that a slit between the decorative part and the display is sealed. The bonding layer may be an adhesive material, the filling layer is foam, and the bonding layer and the filling layer may be rectangular. Correspondingly, a connection groove may be disposed on the decorative part, and the bonding layer and the filling layer are disposed in the connection groove, to save a space.

The foregoing descriptions are only some embodiments and implementations of this application, and are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device (1000), comprising a first structural member (110) and a second structural member (120), wherein the second structural member is fixedly connected to the first structural member;
a mounting groove (154) is disposed on the first structural member, the mounting groove comprises a first groove surface (155) and a second groove surface (156) that are disposed opposite to each other, and the second structural member comprises a first side (172) and a second side (173) that face away from each other; and
at least a part of the second structural member is mounted in the mounting groove, the first side faces the first groove surface, the second side faces the second groove surface, a first limiting block (174) is disposed between the first side and the first groove surface, a second limiting block (175) is disposed between the second side and the second groove surface, and projections of the first limiting block and the second limiting block on the first side are staggered with each other;
wherein a gap that is between the first side and the first groove surface and that corresponds to the second limiting block forms a first avoidance clearance (176), and a gap that is between the second side and the second groove surface and that corresponds to the first limiting block forms a second avoidance clearance (177).

2. The electronic device according to claim 1, wherein the projections of the first limiting block and the second limiting block on the first side are completely staggered.

3. The electronic device according to claim 1 or 2, wherein the second structural member, the first limiting block, and the second limiting block all have elastic deformation performance, and the first avoidance clearance and the second avoidance clearance provide the second structural member, the first limiting block, and the second limiting block with deformation spaces.

4. The electronic device according to any one of claims 1 to 3, wherein the first limiting block is convexly disposed on the first side or the first groove surface, and the second limiting block is convexly disposed on the second side or the second groove surface.

5. The electronic device according to claim 4, wherein the first limiting block is fixed on the first groove surface, the first limiting block is convex relative to the first groove surface, and one side that is of the first limiting block and that faces away from the first groove surface abuts against the first side; and
the second limiting block is fixed on the second groove surface, the second limiting block is convex relative to the second groove surface, and one side that is of the second limiting block and that faces away from the second groove surface abuts against the second side.

6. The electronic device according to claim 5, wherein a first limiting groove (435) is concavely disposed on the first groove surface (431), a second limiting groove (436) is concavely disposed on the second groove surface (432), the first limiting block comprises a first fixed part (441) and a first limiting part (442) that are fixedly connected, and the second limiting block comprises a second fixed part (451) and a second limiting part (452) that are fixedly connected; and
the first fixed part is fastened in the first limiting groove, the first limiting part is convex relative to the first groove surface, the second fixed part is fastened in the second limiting groove, and the second limiting portion is convex relative to the second groove surface.

7. The electronic device according to claim 4, wherein the first limiting block is fixed on the first side, the first limiting block is convex relative to the first side, and one side that is of the first limiting block and that faces away from the first side abuts against the first groove surface; and
the second limiting block is fixed on the second side, the second limiting block is convex relative to the second side, and one side that is of the second limiting block and that faces away from the second side abuts against the second groove surface.

8. The electronic device according to claim 1, wherein the first structural member comprises a first middle frame (110) and a second middle frame (110a), the first middle frame and the second middle frame are rotatably connected, the second structural member comprises a first decorative member (120) and a second decorative member (120a), the first decorative member is fixedly connected to the first middle frame, and the second decorative member is fixedly connected to the second middle frame.

9. The electronic device according to claim 8, wherein the first middle frame comprises a first frame body (150), a first fitting groove (154) is disposed on the first frame body, the first fitting groove extends around a thickness direction of the electronic device, the first fitting groove has a first groove side surface (155) and a second groove side surface (156) that are disposed opposite to each other, the first fitting groove is the mounting groove, the first groove side surface is the first groove surface, and the second groove side surface is the second groove surface; and
the first decorative member extends around the thickness direction of the electronic device and comprises a first mounting part (170), the first mounting part comprises a first mounting side surface (172) and a second mounting side surface (173) that face away from each other, the first mounting side surface is the first side, the second mounting side surface is the second side, the first mounting part is mounted in the first fitting groove, the first mounting side surface faces the first groove side surface, the second mounting side surface faces the second groove side surface, the first limiting block is disposed between the first mounting side surface and the first groove side surface, and the second limiting block is disposed between the second mounting side surface and the second groove side surface.

10. The electronic device according to claim 9, wherein the first limiting block is convexly disposed on the first groove side surface and/or the first mounting side surface, and the second limiting block is convexly disposed on the second groove side surface and/or the second mounting side surface.

11. The electronic device according to claim 9, wherein a gap that is between the first groove side surface and the first mounting side surface and that corresponds to the second limiting block forms a first avoidance clearance, and a gap that is between the second groove side surface and the second mounting side surface and that corresponds to the first limiting block forms a second avoidance clearance.

12. The electronic device according to claim 11, wherein the first mounting part, the first limiting block, and the second limiting block all have elastic deformation performance, and the first avoidance clearance and the second avoidance clearance provide the first mounting part, the first limiting block, and the second limiting block with deformation spaces.

13. The electronic device according to any one of claims 9 to 12, wherein the first decorative member further comprises a first decorative part (160), the first decorative part is fixedly connected to the first mounting part, the first decorative part comprises a first decorative surface (161), a second decorative surface (162), a first decorative side surface (163), and a second decorative side surface (164), the first decorative surface and the second decorative surface face away from each other in a thickness direction of the first decorative member, the first decorative side surface is connected between one side of the first decorative surface and one side of the second decorative surface, the second decorative side surface is connected between the other side of the first decorative surface and the other side of the second decorative surface, the second decorative surface faces the first frame body, and the first mounting part is fixed on the second decorative surface; and
the first frame body has a first outer side surface, the first outer side surface is butt-jointed with the second decorative side surface, and the first decorative surface, the first outer side surface, and the second decorative side surface are parts of an appearance surface of the electronic device.

14. The electronic device according to claim 8, wherein the second middle frame comprises a second frame body (150a), a second fitting groove (154a) is disposed on the second frame body, the second fitting groove extends around a thickness direction of the electronic device, the second fitting groove has a third groove side surface (155a) and a fourth groove side surface (156a) that are disposed opposite to each other, the second fitting groove is the mounting groove, the third groove side surface is the first groove surface, and the fourth groove side surface is the second groove surface; and
the second decorative member extends around the thickness direction of the electronic device and comprises a second mounting part (170a), the second mounting part comprises a third mounting side surface (172a) and a fourth mounting side surface (173a) that face away from each other, the third mounting side surface is the first side, the fourth mounting side surface is the second side, the second mounting part is mounted in the second fitting groove, the third mounting side surface faces the third groove side surface, the fourth mounting side surface faces the fourth groove side surface, the first limiting block is disposed between the third mounting side surface and the third groove side surface, and the second limiting block is disposed between the fourth mounting side surface and the fourth groove side surface.

## Patentansprüche

1. Elektronische Vorrichtung (1000), umfassend ein erstes Strukturelement (110) und ein zweites Strukturelement (120), wobei das zweite Strukturelement fest mit dem ersten Strukturelement verbunden ist;
eine Montagenut (154) ist an dem ersten Strukturelement angeordnet, wobei die Montagenut eine erste Nutfläche (155) und eine zweite Nutfläche (156) umfasst, die einander gegenüberliegend angeordnet sind, und das zweite Strukturelement eine erste Seite (172) und eine zweite Seite (173) umfasst, die voneinander weg weisen; und
zumindest ein Teil des zweiten Strukturelements in der Montagenut montiert ist, wobei die erste Seite der ersten Nutfläche zugewandt ist, die zweite Seite der zweiten Nutfläche zugewandt ist, ein erster Begrenzungsblock (174) zwischen der ersten Seite und der ersten Nutfläche angeordnet ist, ein zweiter Begrenzungsblock (175) zwischen der zweiten Seite und der zweiten Nutfläche angeordnet ist und Projektionen des ersten Begrenzungsblocks und des zweiten Begrenzungsblocks auf der ersten Seite zueinander versetzt sind;
wobei ein Spalt, der sich zwischen der ersten Seite und der ersten Nutfläche befindet und der dem zweiten Begrenzungsblock entspricht, einen ersten Ausweichabstand (176) bildet, und ein Spalt, der sich zwischen der zweiten Seite und der zweiten Nutfläche befindet und der dem ersten Begrenzungsblock entspricht, einen zweiten Ausweichabstand (177) bildet.

2. Elektronische Vorrichtung nach Anspruch 1, wobei die Projektionen des ersten Begrenzungsblocks und des zweiten Begrenzungsblocks auf der ersten Seite vollständig versetzt sind.

3. Elektronische Vorrichtung nach Anspruch 1 oder 2, wobei das zweite Strukturelement, der erste Begrenzungsblock und der zweite Begrenzungsblock alle elastische Verformungseigenschaften aufweisen und der erste Ausweichabstand und der zweite Ausweichabstand dem zweiten Strukturelement, dem ersten Begrenzungsblock und dem zweiten Begrenzungsblock Verformungsräume bereitstellen.

4. Elektronische Vorrichtung nach einem der Ansprüche 1 bis 3, wobei der erste Begrenzungsblock konvex an der ersten Seite oder der ersten Nutfläche angeordnet ist und der zweite Begrenzungsblock konvex an der zweiten Seite oder der zweiten Nutfläche angeordnet ist.

5. Elektronische Vorrichtung nach Anspruch 4, wobei der erste Begrenzungsblock an der ersten Nutfläche befestigt ist, der erste Begrenzungsblock relativ zu der ersten Nutfläche konvex ist und eine Seite, die von dem ersten Begrenzungsblock stammt und die von der ersten Nutfläche weg weist, an der ersten Seite anliegt; und
der zweite Begrenzungsblock an der zweiten Nutfläche befestigt ist, der zweite Begrenzungsblock relativ zu der zweiten Nutfläche konvex ist und eine Seite, die von dem zweiten Begrenzungsblock stammt und die von der zweiten Nutfläche weg weist, an der zweiten Seite anliegt.

6. Elektronische Vorrichtung nach Anspruch 5, wobei eine erste Begrenzungsnut (435) konkav an der ersten Nutoberfläche (431) angeordnet ist, eine zweite Begrenzungsnut (436) konkav an der zweiten Nutoberfläche (432) angeordnet ist, der erste Begrenzungsblock einen ersten festen Teil (441) und einen ersten Begrenzungsteil (442) umfasst, die fest miteinander verbunden sind, und der zweite Begrenzungsblock einen zweiten festen Teil (451) und einen zweiten Begrenzungsteil (452) umfasst, die fest miteinander verbunden sind; und
der erste feste Teil in der ersten Begrenzungsnut befestigt ist, der erste Begrenzungsteil relativ zu der ersten Nutoberfläche konvex ist, der zweite feste Teil in der zweiten Begrenzungsnut befestigt ist und der zweite Begrenzungsteil relativ zu der zweiten Nutoberfläche konvex ist.

7. Elektronische Vorrichtung nach Anspruch 4, wobei der erste Begrenzungsblock an der ersten Seite befestigt ist, der erste Begrenzungsblock relativ zu der ersten Seite konvex ist und eine Seite des ersten Begrenzungsblocks, die von der ersten Seite weg weist, an der ersten Nutoberfläche anliegt; und
der zweite Begrenzungsblock an der zweiten Seite befestigt ist, der zweite Begrenzungsblock relativ zu der zweiten Seite konvex ist und eine Seite des zweiten Begrenzungsblocks, die von der zweiten Seite weg weist, an der zweiten Nutoberfläche anliegt.

8. Elektronische Vorrichtung nach Anspruch 1, wobei das erste strukturelle Element einen ersten mittleren Rahmen (110) und einen zweiten mittleren Rahmen (110a) umfasst, der erste mittlere Rahmen und der zweite mittlere Rahmen drehbar miteinander verbunden sind, das zweite strukturelle Element ein erstes dekoratives Element (120) und ein zweites dekoratives Element (120a) umfasst, das erste dekorative Element fest mit dem ersten mittleren Rahmen verbunden ist und das zweite dekorative Element fest mit dem zweiten mittleren Rahmen verbunden ist.

9. Elektronische Vorrichtung nach Anspruch 8, wobei der erste mittlere Rahmen einen ersten Rahmenkörper (150) umfasst, eine erste Passnut (154) an dem ersten Rahmenkörper angeordnet ist, die erste Passnut sich um eine Dickenrichtung der elektronischen Vorrichtung herum erstreckt, die erste Passnut eine erste Nutseitenfläche (155) und eine zweite Nutseitenfläche (156) aufweist, die einander gegenüberliegend angeordnet sind, die erste Passnut die Montagenut ist, die erste Nutseitenfläche die erste Nutoberfläche ist und die zweite Nutseitenfläche die zweite Nutoberfläche ist; und
das erste dekorative Element sich um die Dickenrichtung der elektronischen Vorrichtung herum erstreckt und einen ersten Montageteil (170) umfasst, wobei der erste Montageteil eine erste Montageseitenfläche (172) und eine zweite Montageseitenfläche (173) umfasst, die voneinander abgewandt sind, wobei die erste Montageseitenfläche die erste Seite ist, die zweite Montageseitenfläche die zweite Seite ist, der erste Montageteil in der ersten Passnut montiert ist, die erste Montageseitenfläche der ersten Nutseitenfläche zugewandt ist, die zweite Montageseitenfläche der zweiten Nutseitenfläche zugewandt ist, der erste Begrenzungsblock zwischen der ersten Montageseitenfläche und der ersten Nutseitenfläche angeordnet ist und der zweite Begrenzungsblock zwischen der zweiten Montageseitenfläche und der zweiten Nutseitenfläche angeordnet ist.

10. Elektronische Vorrichtung nach Anspruch 9, wobei der erste Begrenzungsblock konvex auf der ersten Nutseitenfläche und/oder der ersten Montageseitenfläche angeordnet ist und der zweite Begrenzungsblock konvex auf der zweiten Nutseitenfläche und/oder der zweiten Montageseitenfläche angeordnet ist.

11. Elektronische Vorrichtung nach Anspruch 9, wobei ein Spalt, der sich zwischen der ersten Nutseitenfläche und der ersten Montageseitenfläche befindet und der dem zweiten Begrenzungsblock entspricht, einen ersten Freiraum bildet, und ein Spalt, der sich zwischen der zweiten Nutseitenfläche und der zweiten Montageseitenfläche befindet und der dem ersten Begrenzungsblock entspricht, einen zweiten Freiraum bildet.

12. Elektronische Vorrichtung nach Anspruch 11, wobei der erste Montageteil, der erste Begrenzungsblock und der zweite Begrenzungsblock alle elastische Verformungseigenschaften aufweisen und der erste Freiraum sowie der zweite Freiraum dem ersten Montageteil, dem ersten Begrenzungsblock und dem zweiten Begrenzungsblock Verformungsräume bereitstellen.

13. Elektronische Vorrichtung nach einem der Ansprüche 9 bis 12, wobei das erste dekorative Element ferner einen ersten dekorativen Teil (160) umfasst, der erste dekorative Teil fest mit dem ersten Montageteil verbunden ist, der erste dekorative Teil eine erste dekorative Fläche (161), eine zweite dekorative Fläche (162), eine erste dekorative Seitenfläche (163) und eine zweite dekorative Seitenfläche (164) umfasst, die erste dekorative Fläche und die zweite dekorative Fläche in einer Dickenrichtung des ersten dekorativen Elements voneinander abgewandt sind, die erste dekorative Seitenfläche zwischen einer Seite der ersten dekorativen Fläche und einer Seite der zweiten dekorativen Fläche verbunden ist, die zweite dekorative Seitenfläche zwischen der anderen Seite der ersten dekorativen Fläche und der anderen Seite der zweiten dekorativen Fläche verbunden ist, die zweite dekorative Fläche dem ersten Rahmenkörper zugewandt ist und der erste Montageteil an der zweiten dekorativen Fläche befestigt ist; und
der erste Rahmenkörper weist eine erste äußere Seitenfläche auf, die erste äußere Seitenfläche ist mit der zweiten dekorativen Seitenfläche stumpf verbunden, und die erste dekorative Fläche, die erste äußere Seitenfläche und die zweite dekorative Seitenfläche sind Teile einer Erscheinungsfläche der elektronischen Vorrichtung.

14. Elektronische Vorrichtung nach Anspruch 8, wobei der zweite Mittelrahmen einen zweiten Rahmenkörper (150a) umfasst, wobei eine zweite Passnut (154a) an dem zweiten Rahmenkörper angeordnet ist, die zweite Passnut sich um eine Dickenrichtung der elektronischen Vorrichtung erstreckt, die zweite Passnut eine dritte Nutseitenfläche (155a) und eine vierte Nutseitenfläche (156a) aufweist, die einander gegenüberliegend angeordnet sind, die zweite Passnut die Montagenut ist, die dritte Nutseitenfläche die erste Nutoberfläche ist und die vierte Nutseitenfläche die zweite Nutoberfläche ist; und
wobei sich das zweite dekorative Element um die Dickenrichtung der elektronischen Vorrichtung erstreckt und einen zweiten Montageteil (170a) umfasst, der zweite Montageteil eine dritte Montageseitenfläche (172a) und eine vierte Montageseitenfläche (173a) umfasst, die voneinander weg weisen, die dritte Montageseitenfläche die erste Seite ist, die vierte Montageseitenfläche die zweite Seite ist, der zweite Montageteil in der zweiten Passnut montiert ist, die dritte Montageseitenfläche der dritten Nutseitenfläche zugewandt ist, die vierte Montageseitenfläche der vierten Nutseitenfläche zugewandt ist, der erste Begrenzungsblock zwischen der dritten Montageseitenfläche und der dritten Nutseitenfläche angeordnet ist und der zweite Begrenzungsblock zwischen der vierten Montageseitenfläche und der vierten Nutseitenfläche angeordnet ist.

## Revendications

1. Dispositif électronique (1000), comprenant un premier élément structurel (110) et un second élément structurel (120), dans lequel le second élément structurel est relié de manière fixe au premier élément structurel ;
une rainure de montage (154) est disposée sur le premier élément structurel, la rainure de montage comprend une première surface de rainure (155) et une seconde surface de rainure (156) qui sont disposées à l'opposé l'une de l'autre, et le second élément structurel comprend un premier côté (172) et un second côté (173) qui sont orientés à l'opposé l'un de l'autre ; et
au moins une partie du second élément structurel est montée dans la rainure de montage, le premier côté fait face à la première surface de rainure, le second côté fait face à la seconde surface de rainure, un premier bloc de limitation (174) est disposé entre le premier côté et la première surface de rainure, un second bloc de limitation (175) est disposé entre le second côté et la seconde surface de rainure, et les projections du premier bloc de limitation et du second bloc de limitation sur le premier côté sont décalées l'une par rapport à l'autre ;
dans lequel un espace qui se situe entre le premier côté et la première surface de rainure et qui correspond au second bloc de limitation forme un premier jeu d'évitement (176), et un espace qui se situe entre le second côté et la seconde surface de rainure et qui correspond au premier bloc de limitation forme un second jeu d'évitement (177).

2. Dispositif électronique selon la revendication 1, dans lequel les projections du premier bloc de limitation et du second bloc de limitation sur le premier côté sont complètement décalées.

3. Dispositif électronique selon la revendication 1 ou 2, dans lequel le second élément structurel, le premier bloc de limitation et le second bloc de limitation présentent tous une capacité de déformation élastique, et le premier jeu d'évitement ainsi que le second jeu d'évitement fournissent au second élément structurel, au premier bloc de limitation et au second bloc de limitation des espaces de déformation.

4. Dispositif électronique selon l'une quelconque des revendications 1 à 3, dans lequel le premier bloc de limitation est disposé de manière convexe sur le premier côté ou la première surface de rainure, et le second bloc de limitation est disposé de manière convexe sur le second côté ou la seconde surface de rainure.

5. Dispositif électronique selon la revendication 4, dans lequel le premier bloc de limitation est fixé sur la première surface de rainure, le premier bloc de limitation est convexe par rapport à la première surface de rainure, et un côté du premier bloc de limitation opposé à la première surface de rainure est en butée contre le premier côté ; et
le second bloc de limitation est fixé sur la seconde surface de rainure, le second bloc de limitation est convexe par rapport à la seconde surface de rainure, et un côté du second bloc de limitation opposé à la seconde surface de rainure est en butée contre le second côté.

6. Le dispositif électronique selon la revendication 5, dans lequel une première rainure de limitation (435) est disposée de manière concave sur la première surface de rainure (431), une seconde rainure de limitation (436) est disposée de manière concave sur la seconde surface de rainure (432), le premier bloc de limitation comprend une première partie fixe (441) et une première partie de limitation (442) qui sont reliées de manière fixe, et le second bloc de limitation comprend une seconde partie fixe (451) et une seconde partie de limitation (452) qui sont reliées de manière fixe ; et
la première partie fixe est fixée dans la première rainure de limitation, la première partie de limitation est convexe par rapport à la première surface de rainure, la seconde partie fixe est fixée dans la seconde rainure de limitation, et la seconde partie de limitation est convexe par rapport à la seconde surface de rainure.

7. Le dispositif électronique selon la revendication 4, dans lequel le premier bloc de limitation est fixé sur le premier côté, le premier bloc de limitation est convexe par rapport au premier côté, et un côté qui est celui du premier bloc de limitation et qui est orienté à l'opposé du premier côté vient en butée contre la première surface de rainure ; et
le second bloc de limitation est fixé sur le second côté, le second bloc de limitation est convexe par rapport au second côté, et un côté qui est celui du second bloc de limitation et qui est orienté à l'opposé du second côté vient en butée contre la seconde surface de rainure.

8. Le dispositif électronique selon la revendication 1, dans lequel le premier élément structurel comprend un premier cadre intermédiaire (110) et un second cadre intermédiaire (110a), le premier cadre intermédiaire et le second cadre intermédiaire sont reliés de manière rotative, le second élément structurel comprend un premier élément décoratif (120) et un second élément décoratif (120a), le premier élément décoratif est relié de manière fixe au premier cadre intermédiaire, et le second élément décoratif est relié de manière fixe au second cadre intermédiaire.

9. Le dispositif électronique selon la revendication 8, dans lequel le premier cadre intermédiaire comprend un premier corps de cadre (150), une première rainure d'ajustement (154) est disposée sur le premier corps de cadre, la première rainure d'ajustement s'étend autour d'une direction d'épaisseur du dispositif électronique, la première rainure d'ajustement a une première surface latérale de rainure (155) et une seconde surface latérale de rainure (156) qui sont disposées à l'opposé l'une de l'autre, la première rainure d'ajustement est la rainure de montage, la première surface latérale de rainure est la première surface de rainure, et la seconde surface latérale de rainure est la seconde surface de rainure ; et
le premier élément décoratif s'étend autour de la direction de l'épaisseur du dispositif électronique et comprend une première partie de montage (170), la premiè re partie de montage comprend une première surface latérale de montage (172) et une seconde surface latérale de montage (173) qui sont opposées l'une à l'autre, la premiè re surface latérale de montage est le premier côté, la seconde surface latérale de montage est le second côté, la première partie de montage est montée dans la première rainure d'ajustement, la première surface latérale de montage fait face à la première surface latérale de rainure, la seconde surface latérale de montage fait face à la seconde surface latérale de rainure, le premier bloc de limitation est disposé entre la première surface latérale de montage et la première surface latérale de rainure, et le second bloc de limitation est disposé entre la seconde surface latérale de montage et la seconde surface latérale de rainure.

10. Le dispositif électronique selon la revendication 9, dans lequel le premier bloc de limitation est disposé de manière convexe sur la première surface latérale de rainure et/ou la première surface latérale de montage, et le second bloc de limitation est disposé de manière convexe sur la seconde surface latérale de rainure et/ou la seconde surface latérale de montage.

11. Le dispositif électronique selon la revendication 9, dans lequel un espace situé entre la première surface latérale de rainure et la première surface latérale de montage et correspondant au second bloc de limitation forme un premier jeu d'évitement, et un espace situé entre la seconde surface latérale de rainure et la seconde surface latérale de montage et correspondant au premier bloc de limitation forme un second jeu d'évitement.

12. Le dispositif électronique selon la revendication 11, dans lequel la première partie de montage, le premier bloc de limitation et le second bloc de limitation présentent tous une capacité de déformation élastique, et le premier jeu d'évitement et le second jeu d'évitement fournissent à la première partie de montage, au premier bloc de limitation et au second bloc de limitation des espaces de déformation.

13. Le dispositif électronique selon l'une quelconque des revendications 9 à 12, dans lequel le premier élément décoratif comprend en outre une première partie décorative (160), la première partie décorative est reliée de manière fixe à la première partie de montage, la première partie décorative comprend une première surface décorative (161), une seconde surface décorative (162), une première surface latérale décorative (163) et une seconde surface latérale décorative (164), la première surface décorative et la seconde surface décorative sont opposées l'une à l'autre dans une direction d'épaisseur du premier élément décoratif, la première surface latérale décorative est reliée entre un côté de la première surface décorative et un côté de la seconde surface décorative, la seconde surface latérale décorative est reliée entre l'autre côté de la première surface décorative et l'autre côté de la seconde surface décorative, la seconde surface décorative fait face au premier corps de cadre, et la première partie de montage est fixée sur la seconde surface décorative ; et
le premier corps de cadre présente une première surface latérale extérieure, la première surface latérale extérieure est assemblée en about avec la deuxième surface latérale décorative, et la première surface décorative, la première surface latérale exté rieure et la deuxième surface latérale décorative font partie d'une surface apparente du dispositif électronique.

14. Le dispositif électronique selon la revendication 8, dans lequel le second cadre interm é diaire comprend un second corps de cadre (150a), une seconde rainure d'ajustement (154a) est disposée sur le second corps de cadre, la seconde rainure d'ajustement s'étend autour d'une direction d'épaisseur du dispositif électronique, la seconde rainure d'ajustement comporte une troisième surface latérale de rainure (155a) et une quatrième surface latérale de rainure (156a) qui sont disposées à l'opposé l'une de l'autre, la seconde rainure d'ajustement est la rainure de montage, la troisième surface latérale de rainure est la première surface de rainure, et la quatrième surface latérale de rainure est la seconde surface de rainure ; et
le second élément décoratif s'étend autour de la direction d'épaisseur du dispositif électronique et comprend une seconde partie de montage (170a), la seconde partie de montage comprend une troisième surface latérale de montage (172a) et une quatrième surface latérale de montage (173a) qui sont orientées à l'opposé l'une de l'autre, la troisième surface latérale de montage est le premier côté, la quatrième surface latérale de montage est le second côté, la seconde partie de montage est montée dans la seconde rainure d'ajustement, la troisième surface latérale de montage fait face à la troisième surface latérale de rainure, la quatrième surface latérale de montage fait face à la quatrième surface latérale de rainure, le premier bloc de limitation est disposé entre la troisième surface latérale de montage et la troisième surface latérale de rainure, et le second bloc de limitation est disposé entre la quatrième surface latérale de montage et la quatrième surface latérale de rainure.
